# EUROPEAN PATENT SPECIFICATION

(11) **EP 3 848 896 B1**
(45) Date of publication and mention of the grant of the patent: **27.12.2023**
(21) Application number: 21160183.6
(22) Date of filing: 09.12.2016
(51) Int. Cl.: G06T 7/254, G06T 1/00, G06T 7/246, C02F 3/00

(54) **METHOD OF MULTIVARIABLE CONTROL FOR OPTIMIZING THE OPERATION OF WASTEWATER TREATMENT PLANT**
MULTIVARIABLES STEUERUNGSVERFAHREN ZUR OPTIMIERUNG DES BETRIEBS EINER ABWASSERKLÄRANLAGE
PROCÉDÉ DE COMMANDE MULTIVARIABLE POUR OPTIMISER LE FONCTIONNEMENT D'UNE INSTALLATION DE TRAITEMENT DES EAUX USÉESCES

(43) Date of publication of application: 14.07.2021
(62) Divisional of application: 16382594.6
(73) Proprietor: Fundacion Centro de Tecnologias de Interaccion Visual y comunicaciones Vicomtech, 20009 San Sebastian (ES)
(72) Inventor: MAIZA GALPARSORO, Mikel, 20009 San Sebastian (ES); GIL LERCHUNDI, Amaia, 20009 San Sebastian (ES); ODRIOZOLA GONZALEZ, Juan Vicente, 20009 San Sebastian (ES)
(74) Representative: Balder IP Law, S.L.

(56) References cited:
- HEIKKONEN J ED - CALDERARA SIMONE ET AL: "A computer vision approach to air flow analysis", PATTERN RECOGNITION LETTERS, ELSEVIER, AMSTERDAM, NL, vol. 17, no. 4, 4 April 1996 (1996-04-04), pages 369-385, XP004021743, ISSN: 0167-8655, DOI: 10.1016/0167-8655(95)00133-6
- Anonymous: "Wastewater treatment plant monitors Greenhouse Gas emissions Envirotech Online", , 9 July 2014 (2014-07-09), XP055375656, Retrieved from the Internet: URL:https://www.envirotech-online.com/news /gas-detection/8/gasmet/wastewater_treatme nt_plant_monitors_greenhouse_gas_emissions /30792 [retrieved on 2017-05-24]
- DIERKS S ET AL: "Zur Schwachstellenanalyse und fernmesstechnischen Ermittlung von Methanemission von Biogasanlagen", GAS- UND WASSERFACH, GAS - ERDGAS, MÜNCHEN : OLDENBOURG-INDUSTRIEVERL., 2001-, DE, vol. 157, no. 9, October 2016 (2016-10), pages 690-695, XP009194487, ISSN: 0016-4909
- SWEETAPPLE CHRISTINE ET AL: "Multi-objective optimisation of wastewater treatment plant control to reduce greenhouse gas emissions", WATER RESEARCH, ELSEVIER, AMSTERDAM, NL, vol. 55, 15 February 2014 (2014-02-15), pages 52-62, XP028843174, ISSN: 0043-1354, DOI: 10.1016/J.WATRES.2014.02.018
- XAVIER FLORES-ALSINA ET AL: "Including greenhouse gas emissions during benchmarking of wastewater treatment plant control strategies", WATER RESEARCH, ELSEVIER, AMSTERDAM, NL, vol. 45, no. 16, 21 April 2011 (2011-04-21), pages 4700-4710, XP028282111, ISSN: 0043-1354, DOI: 10.1016/J.WATRES.2011.04.040 [retrieved on 2011-04-29]
- MANNINA GIORGIO ET AL: "Greenhouse gases from wastewater treatment - A review of modelling tools", SCIENCE OF THE TOTAL ENVIRONMENT, ELSEVIER, AMSTERDAM, NL, vol. 551, 12 February 2016 (2016-02-12), pages 254-270, XP029472100, ISSN: 0048-9697, DOI: 10.1016/J.SCITOTENV.2016.01.163

## Description

### TECHNICAL FIELD

The present invention relates to industrial plants and processes having gas emissions, such as plants and processes for treating wastewater. In particular, it relates to systems and methods for monitoring and controlling those plants.

### BACKGROUND OF THE INVENTION

An urban wastewater treatment plant (WWTP) is an industrial plant in charge of treating the black waters of an urban environment (tributary), with the objective of obtaining at the outlet (effluent), purified water that complies with some chemical and biochemical characteristics imposed by the discharge requirements according to the European regulation for the treatment of urban wastewater (Directive 91/271/EEC and Directive 98/15/EC), so that water is returned to a receiving stream (river, reservoir, sea) under appropriate conditions.

The discharge requirements may vary depending on the type of area in which the water is discharged. The main discharge requirements are Chemical Oxygen Demand (COD) or Biological Oxygen Demand (BOD₅, BOD analyzed at 5 days), Total Suspended Solids (TSS), Total Nitrogen (TN), Nitrates (NO₃-), Ammonium (NH₄+) and Total Phosphorus (TP).

Conventional control systems for wastewater treatment plants have been designed with the purpose of complying with the above mentioned discharge requirements. In most cases, these control systems have been developed based on classical control loops of a single variable or SISO (Single Input-Single Output) systems. Specifically, the main and most widely used WWTP control loops are: i) the ammonium (NH₄+) effluent control loop; ii) the dissolved oxygen (DO) concentration control loop in the nitrification process (aerobic reactors); iii) the internal recirculation flow control loop or nitrate concentration (NO₃-) in the denitrification process (anoxic reactors), and iv) the mixed liquor suspended solids (MLSS) concentration control loop. These control loops are usually implemented through the proportional-integral classical control (PI).

Besides, in response to the promotion of European policies on energy efficiency, reduction of energy consumption and reduction of emissions (Directive 2012/27/EU), control systems for wastewater treatment plant have included as a control objective the minimization of energy consumption of the plant or, in those plants involving production, such as biogas production, the maximization of the energy balance between consumption and production.

However, mainly due to the fact that the main operational variables to be controlled both from the point of view of effluent quality and from the point of view of energy efficiency are (i) the aeration consumption that takes place to maintain the desired DO concentration in the process of nitrification (aerobic reactors) and (ii) the concentration of MLSS, the corresponding control loops have not undergone technical variations as such, but have become commanded by new strategies of operation. These operational strategies are established at all times by the personnel responsible for the operation of the plant, which prioritize the effluent quality objective or the energy efficiency objective of the plant. Therefore, these control systems remain being control systems of a single variable that can achieve a local optimum. The effluent quality and energy efficiency objectives of the plant are (or at least may be) conflicting, which means that the operation control of the plant must be approached as a multivariate control problem.

Nowadays, one aspect that is not taken into account and hardly explored in the field of operation and maintenance of WWTPs is that of the greenhouse gases (GHG) emitted therein directly into the atmosphere. It is known that in WTTPs, N₂O, CO₂ and CH₄ gases are mainly produced, which are emitted directly to the atmosphere, as a result of biochemical transformations that take place in the reactors in which biological purification processes are carried out.

Although the regulation applicable to wastewater treatment processes does not currently require direct N₂O, CO₂ and CH₄ emissions to be controlled to the atmosphere, based on the most recently acquired emission mitigation commitments, such as KLIMA 2050 or COP 21 Paris, it is expected to do so in the short or medium term. To do this, it will be necessary to have systems that allow quantification of such emissions online, as well as control systems that include such measures of emissions among the operational parameters of the process to be controlled so that, in the end, those emissions can be reduced.

C. Sweetapple et al. have investigated in "Multi-objective optimization of wastewater treatment plant control to reduce greenhouse gas emissions", WATER RESEARCH, ELSEVIER, Amsterdam, NL, vol. 55, 15 February 2014, pages 52-62, the potential of control strategy optimization for the reduction of operational greenhouse gas emissions from wastewater treatment in a cost-effective manner.

At present, the N₂O, CO₂ and CH₄ gases are measured in these plants very sporadically, by means of very expensive and laborious experimental campaigns that can last between 2 weeks and 2 months, using "off-gas" bells. These bells sample air from a bounded area of the plant's biological reactor. During the experimental campaign, the measuring equipment moves along the length of the reactor, trying to cover the largest possible area and obtaining sufficiently representative measurements, but given the large size of the reactors, achieving this objective is extremely complicated. Thus, the information on emissions of these gases in the plant obtained by these experimental campaigns is very limited and corresponds to very limited time periods, and therefore cannot be used for the purposes of operation and control of the plant.

There are commercially available gas sensors which provide online concentration information of various types of gases, including the N₂O, CO₂ and CH₄ gases, at specified points in the environment. Although the information is available online, the measures obtained can hardly be considered as representative of the emission of these gases that is produced in a biological reactor of a plant.

There are also commercially available thermographic cameras that allow the online detection of gas emissions in the form of an image. Specifically, these cameras provide an image of the plume of a gas emitted from a source of gas production into the atmosphere, such as a leakage of a gas flowing through a conduit. These types of cameras are usually used in industrial processes for leak detection. However, they do not provide information on the amount of gas emitted. That is, while gas sensors provide quantitative information in the form of a gas concentration at a given point in the environment, thermographic cameras offer qualitative information related to the existence or non-existence of a gas plume in the environment.

Therefore, there is a need for continuously and accurately quantifying the amount of greenhouse gases emitted to the atmosphere by WWTPs.

### DESCRIPTION OF THE INVENTION

The present invention attempts to cope with the need mentioned above by means of a method of multivariable control for optimizing the operation of a wastewater treatment plant (WWTP), based on the analysis of the main qualitative and quantitative measures of the WWTP, including the quantitative measurement of greenhouse gases (GHG) emitted directly into the atmosphere as a result of the biological processes of biodegradation that take place in the WWTP. The method and system provide real-time response. In the context of the present invention, the term "real-time" refers to tasks whose solving requires a response time in the order or milliseconds, for example in less than 1 second.

In order to quantify the GHC emissions produced in WWTPs, a triangular configuration of thermographic cameras is used for obtaining images, which are then processed. The triangular configuration provides a volumetric, three-dimensional image of the plume of a gas emitted into the atmosphere, which is then processed and normalized, to obtain quantitative information on the emission of GHG produced in the WWTP reactors. The volumetric three-dimensional image of the emitted gas plume is obtained from the fusion of a plurality of 2D images provided by each of the cameras, by applying techniques of digital correlation of images. These techniques favor the alignment and correlation of images to form new 3D images. In addition, these techniques enable accurately online tracking of shape changes that occur in the images, produced by the continuous emission of gases and the diffusion of these gases in the environment. By incorporating the time variable determined by the sampling frequency in the image capture, the volumetric image flow rate of the gases emission (m³/s) produced in the WWTP reactor is obtained.

A calibration method can be applied, for which a calibration system comprising a plurality of gas sensors is used. In other words, the method for quantifying GHC emissions produced in a WWTP is preferably calibrated, in a start-up stage, by means of gas sensors installed, preferably disposed in a matrix form, on the reactor (above the surface of which GHG are emitted into the atmosphere) that is the object of GHG emission quantification. Depending on the size of the reactor, the implementation of the calibration system may vary: in large reactors, a floating platform on which the sensor array is installed is preferably used; while in small reactors, the sensor array is preferably installed either on a set of cables attached to the safety handrails surrounding the reactor or on a set of vertical poles around the reactor. The calibration implies determining the average concentration of gas emitted in the WWTP reactor in each cubic meter of the atmosphere (mg/m³), in order to be able to then normalize that calibration parameter to a volumetric image provided by an image processing system. Finally, by combining the normalized parameter of gas concentration per cubic meter of image (mg/m³) with the volumetric image flow rate of the GHG emission at each moment (m³/s) provided by the image processing system, the instantaneous mass flow (mg/s) of GHG emissions emitted in the WWTP reactor is obtained.

A method and system for online control of the operation of the WWTP is provided, that takes into account, in addition to the discharge requirements and the objectives of energy efficiency and economic efficiency, GHGs that are produced in the WWTP at all times. This enables that such GHG emissions are emitted in the WWTP in a controlled way. Therefore, these emissions can be reduced. The method and system for online control of the operation of the WWTP comprise a generator of data models for plant simulation and a mathematical optimization system.

A method for generating a model for the WWTP can be provided. WWTP models are generated based on the intelligent analysis of process data. Before proceeding to use such data, they are first virtualized and normalized afterwards. In WWTPs large amounts of heterogeneous data are managed, such as data acquired online through sensors, meters and process analyzers installed in the plant and managed through SCADA systems, or data acquired off-line, such as data obtained from laboratory analysis, from process & equipment maintenance management systems or from events management systems. All these data are of different nature and are acquired and recorded at different sampling frequencies, as a consequence of which they need to be normalized in order to use them in a combined way. The model generator of the present invention normalizes such data, preferably normalizing types, time base, sampling frequency and scale. Among the data to be normalized are the GHG emission data provided by the GHG quantification system.

A method of calibration can also be provided, for real time re-calibration of an existing model of WWTP.

A mathematical optimization method can be provided. It uses additional data, external to the WWTP, that significantly influence the WWTP operation (for example in terms of purification efficiency, energy efficiency, economic performance, GHG emission). Nonlimiting examples of these additional data are meteorological data and hourly electricity tariffs (rate).

WWTP models generated by the method for generating a WWTP model permit the online simulation of the WWTP, providing the mathematical optimization method with predictive capacity.

Conventional models for WWTP modelling and simulating, such as the deterministic biochemical models of the International Water Association (IWA), belonging to the family of models ASM (ASM1, ASM2, ASM2d and ASM3) and ADM (ADM1), are respectively used for the modeling of the water line and the sludge line of a WWTP. The application of these models beyond a scientific scope is very limited due to the economic cost and complexity associated to the experimental calibration of these models, as well as to the complexity of integration of the different models (water line and sludge line) and to the computational cost associated with the simulation of these models.

The method for generating a WWTP model constructs models based on data applying systems identification techniques. It preferably applies an artificial neural network. These models reproduce the behavior of the WWTP, including purification processes, energy processes and GHG emission processes. Besides, these models can be calibrated in real time. The resulting models are used, that is, simulated, on line, by the mathematical optimization method. In order to calibrate and simulate these models, they are fed with historical and/or online data from the WWTP. Among the data to be predicted by these models are GHG emission data provided by the GHG quantification method of the invention.

The mathematical optimization method uses the previously indicated data models to simulate the behavior of the WWTP at all times, so that it can optimize any criteria established at each moment. Before simulating the WWTP model with the online data of each moment, a task of normalization and adaptation of those data is carried out, following the same approach that follows the model generation method. Also, prior to simulating the WWTP model, the need to calibrate the model is verified. The mathematical optimization is preferably carried out by running an evolutionary optimization algorithm, namely, a genetic algorithm that is executed in an iterative way. The mathematical optimization method preferably takes four types of optimization criteria into account: 1) criteria for the optimization of treated wastewater quality (effluent quality in absolute terms, effluent quality in relative terms or discharge yield); 2) energy optimization criteria (minimization of energy consumption, maximization of energy efficiency, optimization of the energy balance between consumption and energy production); 3) economic optimization criteria (minimization of the economic cost of the energy consumed, maximization of the economic benefit of the energy produced, maximization of the cost-benefit ratio of the balance between energy consumed and energy produced, minimization of consumption of chemical reagents); 4) air quality criteria or GHG emission criteria (emission of N₂O, CO₂ and or CH₄). Such optimization criteria are set in the form of objective function (single-objective or multi-objective). In sum, the mathematical optimization method has capacity to provide instruction for MIMO (Multiple Input Multiple Output) control. It has predictive capacity and takes multiple optimization criteria into account. Global optimal results are thus obtained.

In a first aspect of the invention, a method of multivariable control for optimizing the operation of a wastewater treatment plant is disclosed. It comprises: gathering from a monitoring and control system a set of optimization priorities established for the operation of the wastewater treatment plant; gathering and virtualizing process data and discharge quality data, electric tariff rate data, meteorological data and instant values of mass flow of the greenhouse gases emitted by the reactor; and optimizing from said process data and discharge quality data, electric tariff rate data, meteorological data and instant values of mass flow of the greenhouse gases at least one of the following operation variables of the wastewater treatment plant: control loop setpoint for effluent ammonium (NH₄⁺) concentration; control loop setpoint for ferric chloride dosage (FeCl₃) for physicochemical phosphorus removal at the end of the biological treatment; control loop setpoint for DO concentration of aerobic reactors; control loop setpoint for nitrate (NO₃⁻) concentration in the anoxic reactor or internal recirculation flow rate; control loop setpoint of solids concentration in the mixed liquor (MLSS) or SRT (solids retention time); HRT (hydraulic retention time); flow rate of the blowers; and operating pressure of the blowers. The instant values of mass flow of the greenhouse gases emitted by the reactor are obtained over time as follows: at time instant t, obtaining a first 2D image from a first camera, a first 2D image from a second camera and a first 2D image from a third camera, these first 2D images corresponding to views of the plume of the greenhouse gases emitted by said reactor at time instant t; obtaining a first 3D image of the plume of the emitted greenhouse gases from said first 2D images; at time instant t+1, obtaining a second 2D image from the first camera, a second 2D image from the second camera and a second 2D image from the third camera, these second 2D images corresponding to views of the plume of the greenhouse gases emitted by said reactor at time instant t+1; obtaining a second 3D image of the plume of the emitted greenhouse gases from second 2D images; obtaining differences between said first and second 3D images; and obtaining from said differences a mass flow of the greenhouse gases emitted by said reactor at time instant t+1.

In embodiments of the invention, at said optimizing stage, at least two of said operation variables of the wastewater treatment plant, are optimized.

In embodiments of the invention, at said optimizing stage, all of said operation variables of the wastewater treatment plant, are optimized.

In embodiments of the invention, the set of optimization priorities comprises the following criteria: maximum quality of effluent, defined by at least one, preferably at least two, and more preferably all of the following parameters Chemical Oxygen Demand (COD) or Biological Oxygen Demand (BOD₅, BOD analyzed at 5 days), Total Suspended Solids (TSS), Total Nitrogen (TN), Nitrates (NO₃⁻), Ammonium (NH₄) and Total Phosphorus (TP); maximum energy efficiency, defined by the total energy consumption of the WWTP; maximum economic efficiency, defined by the total cost of operation of the WWTP; minimum GHG emission.

In embodiments of the invention, the set of optimization priorities comprises at least two of said criteria.

In embodiments of the invention, the set of optimization priorities comprises all of said criteria.

In embodiments of the invention, the stage of optimizing operation parameters of the wastewater treatment plant, comprises: defining an objective function based on said a set of optimization priorities; building a genetic algorithm and establishing initial population, evolution rules and criteria of stop or convergence; feeding a simulation of the wastewater treatment plant to be launched by said genetic algorithm with the last available values of said process data and discharge quality data and instant values of mass flow of the greenhouse gases emitted by the reactor, electric tariff data and meteorological data; launching said genetic algorithm which in turn launches a simulation of the wastewater treatment plant from a wastewater treatment plant model; stopping the genetic algorithm when said established criteria of stop or convergence have been reached and retrieving the optimized operation parameters of the wastewater treatment plant.

In embodiments of the invention, the stage of optimizing operation parameters of the wastewater treatment plant, further comprises calibrating said wastewater treatment plant model prior to executing said optimization.

In embodiments of the invention, the stage of optimizing operation parameters of the wastewater treatment plant, further comprises generating a wastewater treatment plant model.

Additional advantages and features of the invention will become apparent from the detail description that follows and will be particularly pointed out in the appended claims.

### BRIEF DESCRIPTION OF THE DRAWINGS

As a complement to the description and with a view to contributing towards an improved understanding of the characteristics of the invention, according to an example of a practical example thereof, a set of drawings is attached as an integral part of this description, which by way of illustration and not limitation, represent the following:

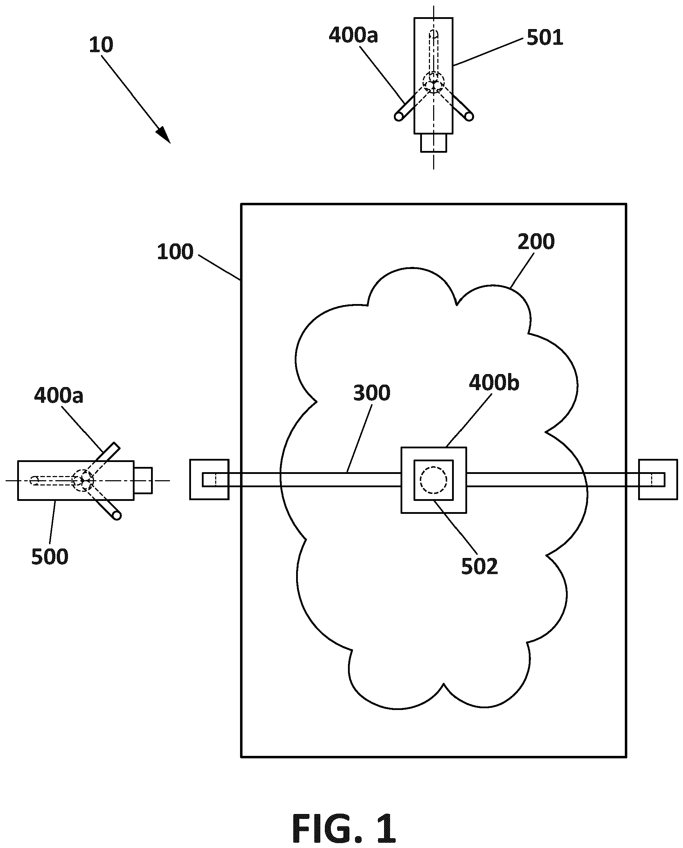

Figure 1A represents a general plant outline (plant view) of a wastewater treatment plant (WWTP) in which three thermographic cameras are installed for quantifying greenhouse gases (GHG) emission according to an embodiment of the invention.

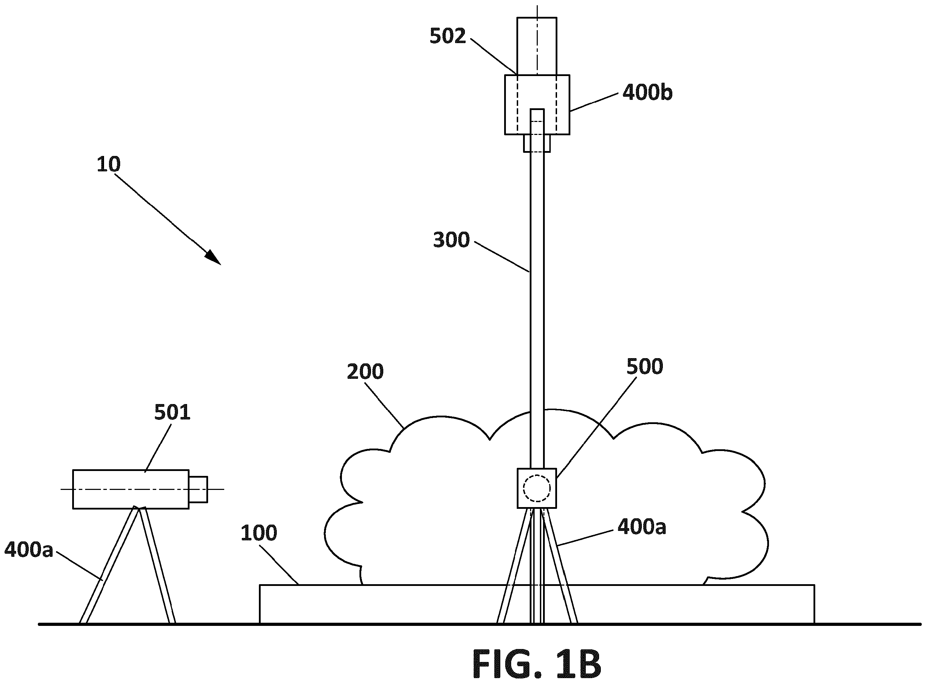

Figure 1B represents a profile outline of the WWTP and thermographic cameras of figure 1A.

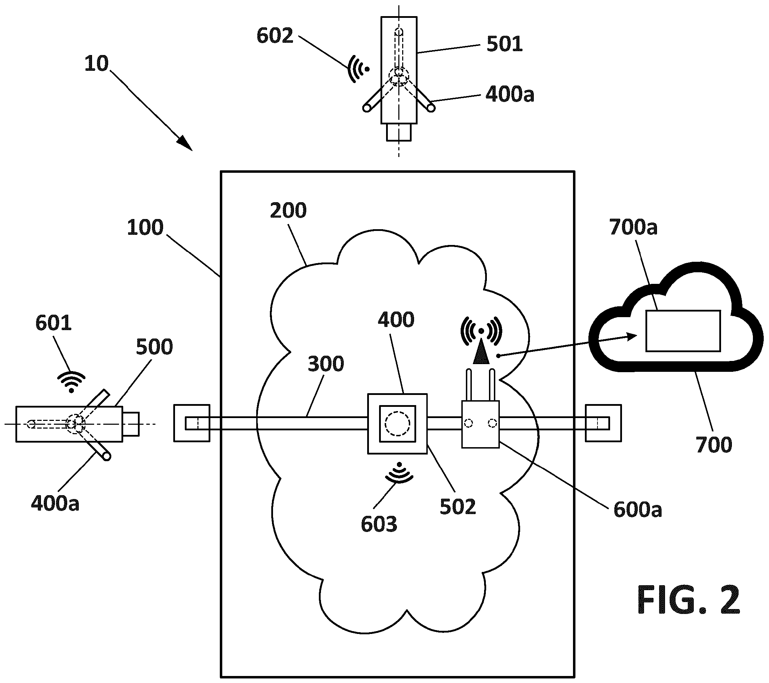

Figure 2 shows how the cameras for quantifying greenhouse gases (GHG) emission of figures 1A and 1B transmit the data corresponding to the respective images captured by them to the cloud, wherein a gas quantification algorithm is executed for creating a 3D image corresponding to the GHG emitted to the atmosphere by the reactor.

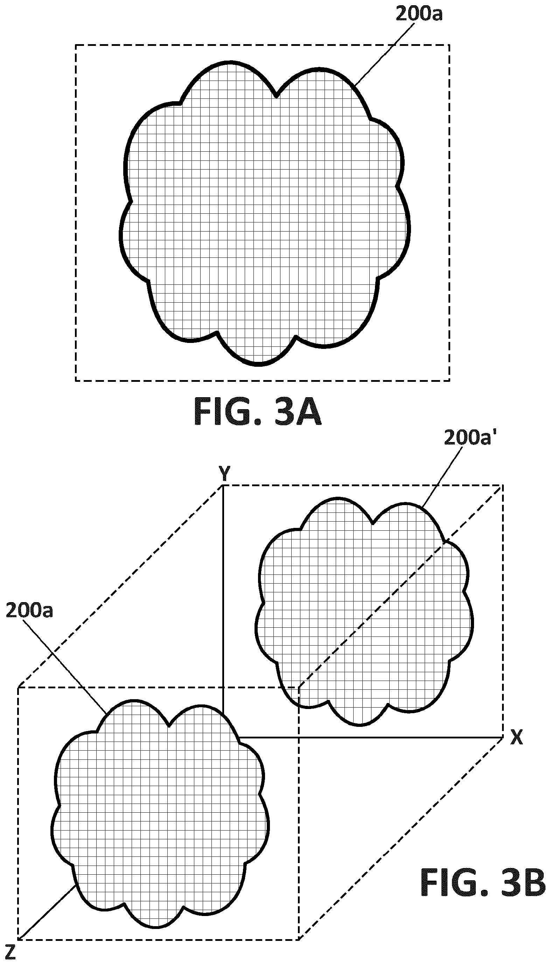

Figure 3A shows a front view of a 2D surface disposed in the space of an image of a GHG plume formed in a reactor of a WWTP in a certain time instant. The 2D surface corresponds to an image been taken by a front camera, digitalized and normalized according to the invention. Figure 3B shows the front view of the 2D surface of figure 3A, together with its 2D projection in the XY plane.

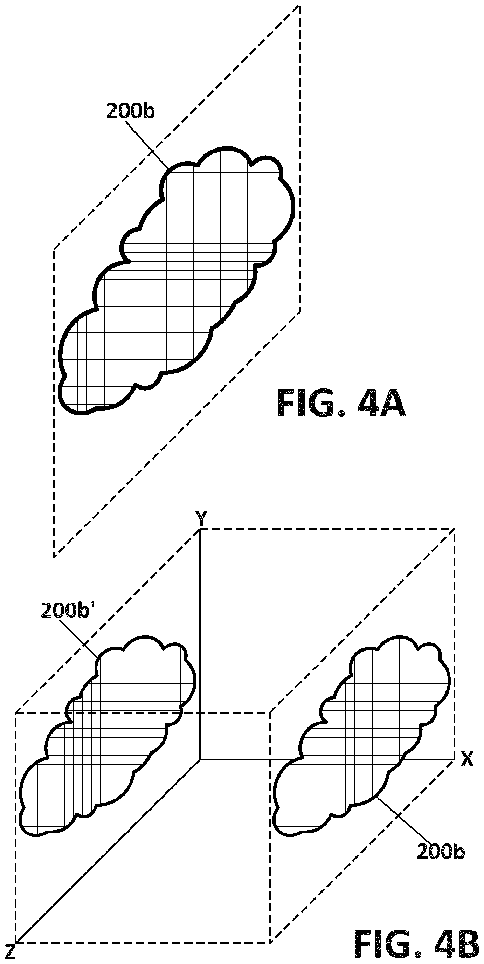

Figure 4A shows a front-lateral view of a 2D surface disposed in the space of an image of a GHG plume formed in a reactor of a WWTP in a certain time instant. The 2D surface corresponds to an image taken by a front camera, digitalized and normalized according to the invention. Figure 4B shows the front-lateral view of the 2D surface of figure 4A, together with its 2D projection in the YZ plane.

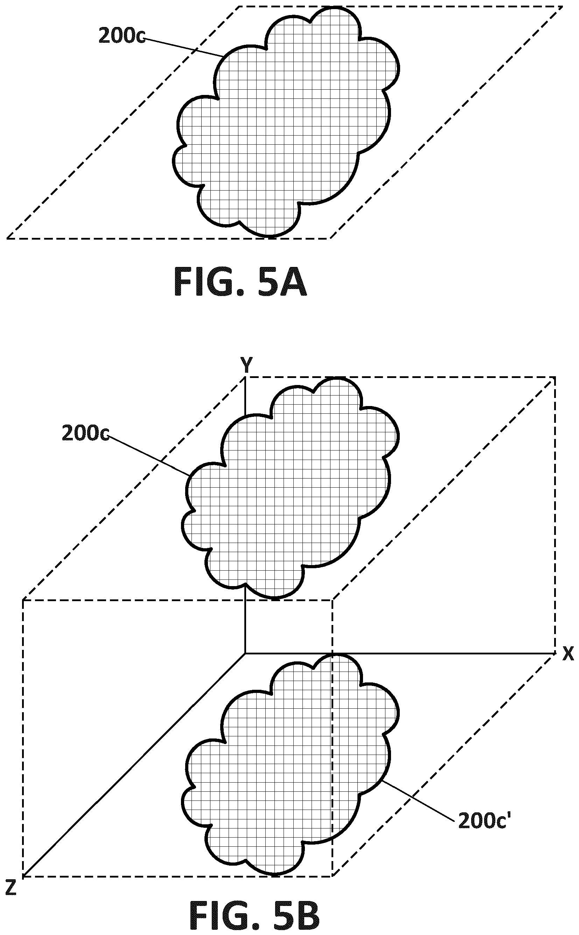

Figure 5A shows a front-top view of a 2D surface disposed in the space of an image of a GHG plume formed in a reactor of a WWTP in a certain time instant. The 2D surface corresponds to an image taken by a front camera, digitalized and normalized according to the invention. Figure 5B shows the front-top view of the 2D surface of figure 5A, together with its 2D projection in the XZ plane.

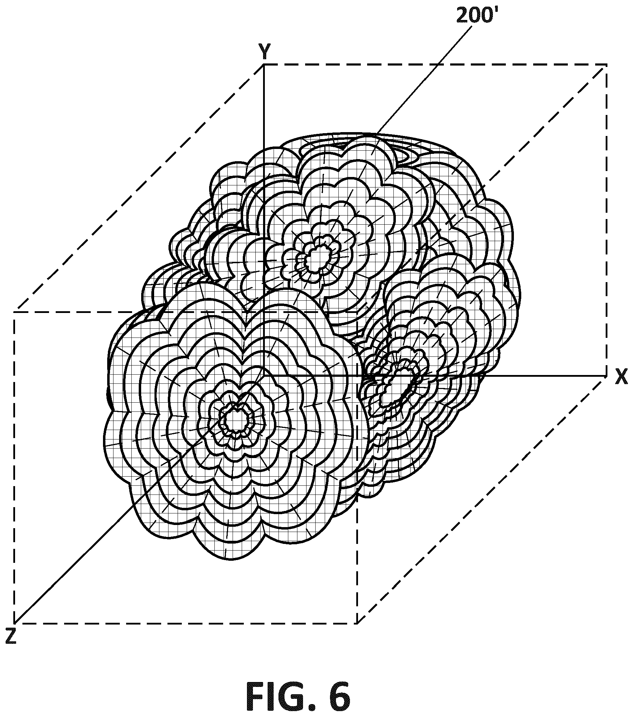

Figure 6 shows a view of a 3D volume disposed in the space, of an image of a GHG plume formed in a reactor of a WWTP in a certain time instant. The 3D volume is the result of the reconstruction of the 2D surfaces shown in figures 3B, 4B and 5B.

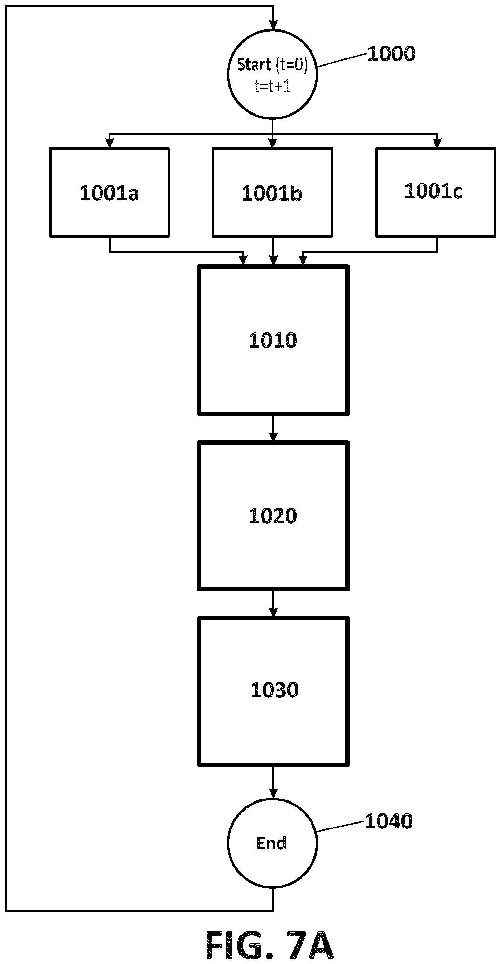

Figure 7A shows a flow diagram of the gas quantification algorithm for determining the mass flow of the GHG emitted into the atmosphere by the reactor of the WWTP at time t, necessary in the method of multivariable control for optimizing the operation of a wastewater treatment plant according to an embodiment of the invention.

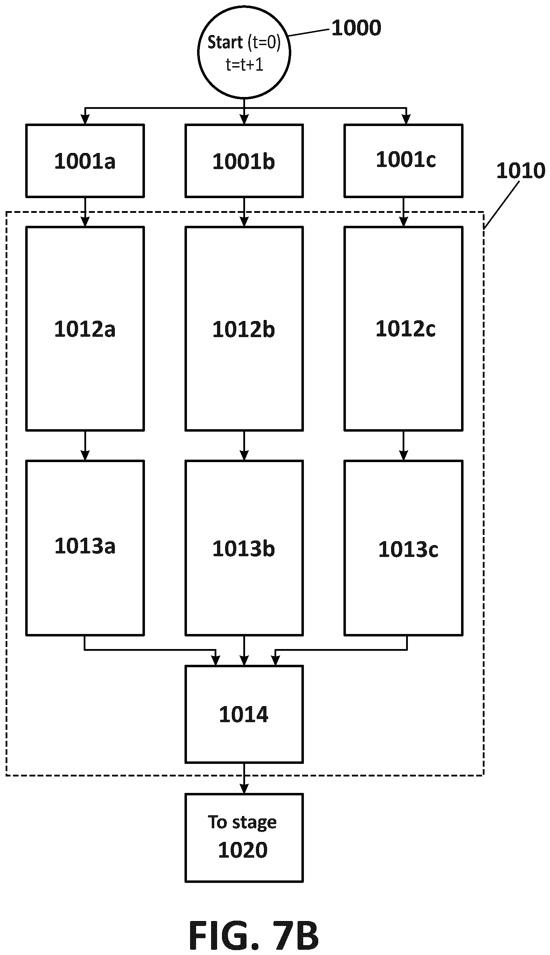

Figure 7B shows a flow diagram of an algorithm for obtaining a 3D image of the plume of the GHG emitted into the atmosphere by the reactor of the WWTP at time t, necessary in the method of multivariable control for optimizing the operation of a wastewater treatment plant according to an embodiment of the invention. This algorithm for obtaining a 3D image corresponds to stage 1010 of the gas quantification algorithm of figure 7A.

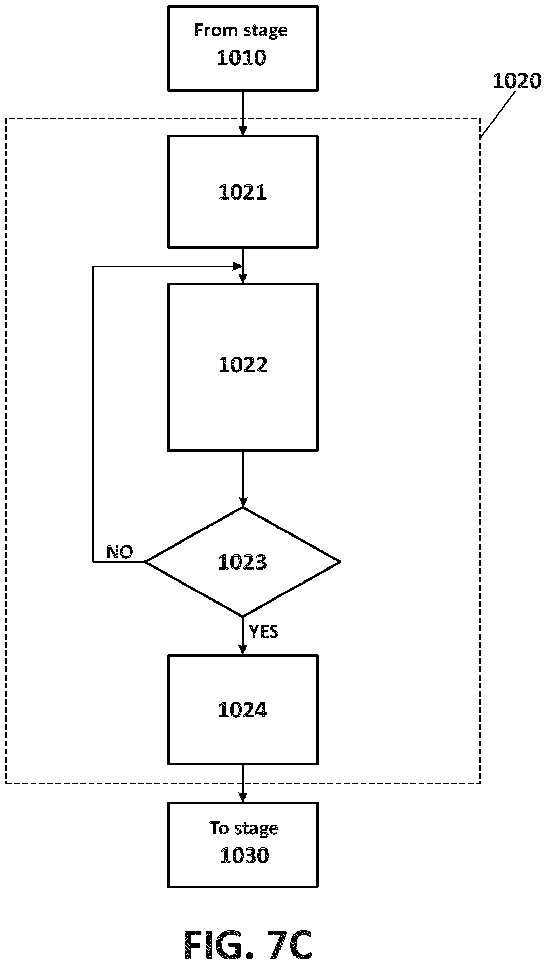

Figure 7C shows a flow diagram of an algorithm for obtaining differences between 3D images of the plume of the GHG emitted into the atmosphere by the reactor of the WWTP at time instants t and t-1, necessary in the method of multivariable control for optimizing the operation of a wastewater treatment plant according to an embodiment of the invention. This algorithm for obtaining differences between 3D images corresponds to stage 1020 of the gas quantification algorithm of figure 7A.

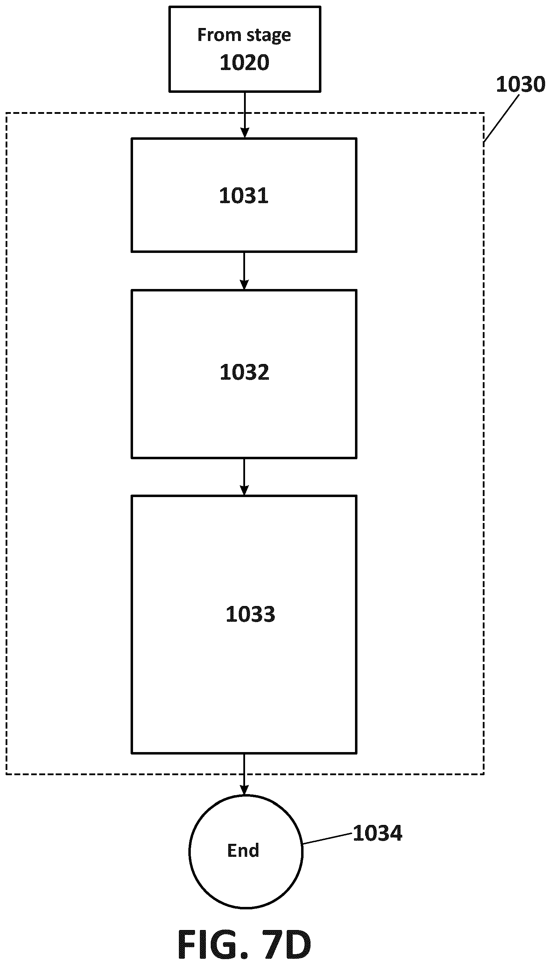

Figure 7D shows a flow diagram of an algorithm for obtaining the mass flow of the GHG emitted into the atmosphere by the reactor of the WWTP at time instant t, necessary in the method of multivariable control for optimizing the operation of a wastewater treatment plant according to an embodiment of the invention. This algorithm for obtaining the mass flow corresponds to stage 1030 of the gas quantification algorithm of figure 7A.

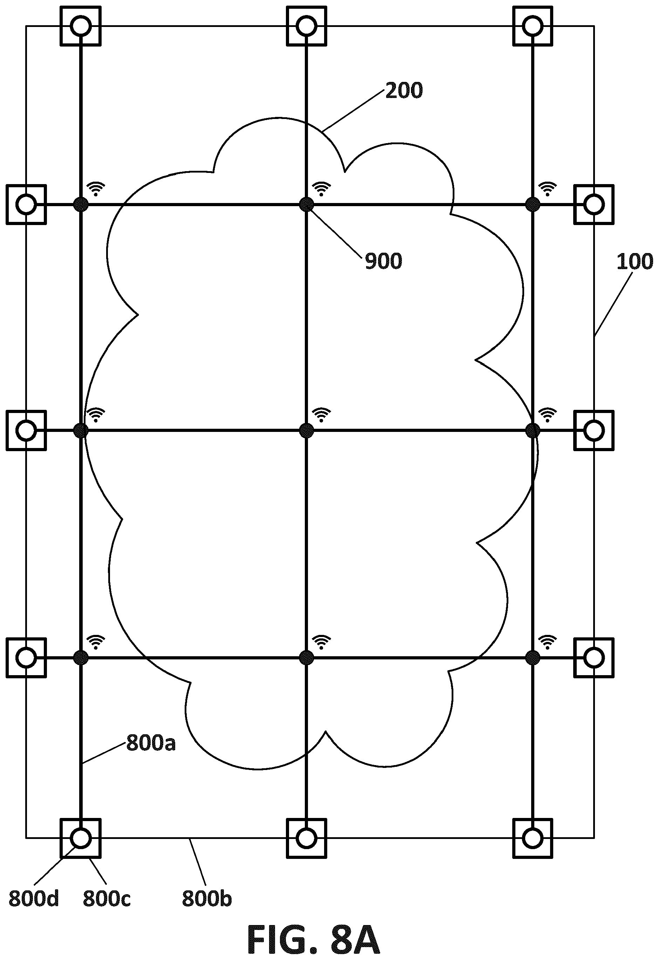

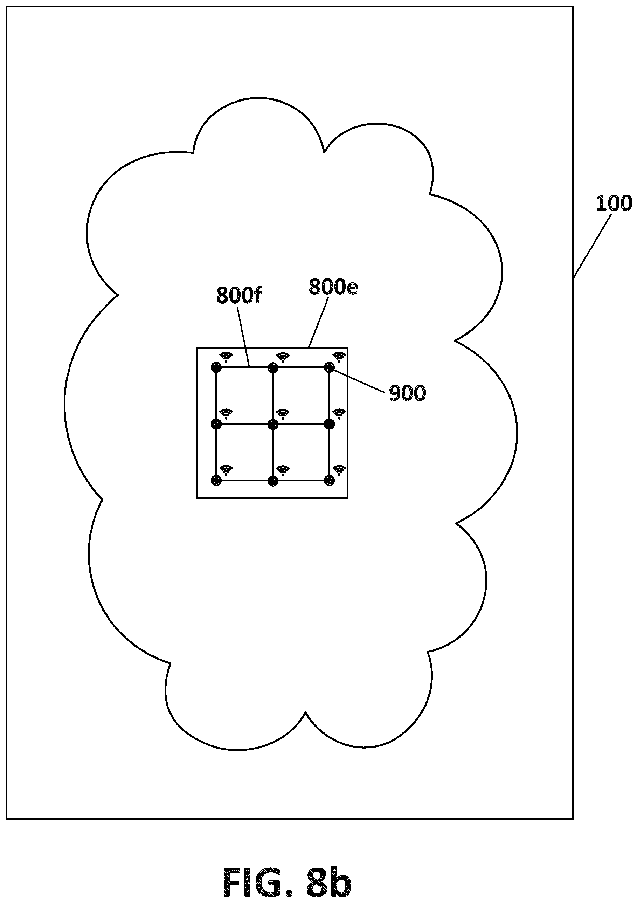

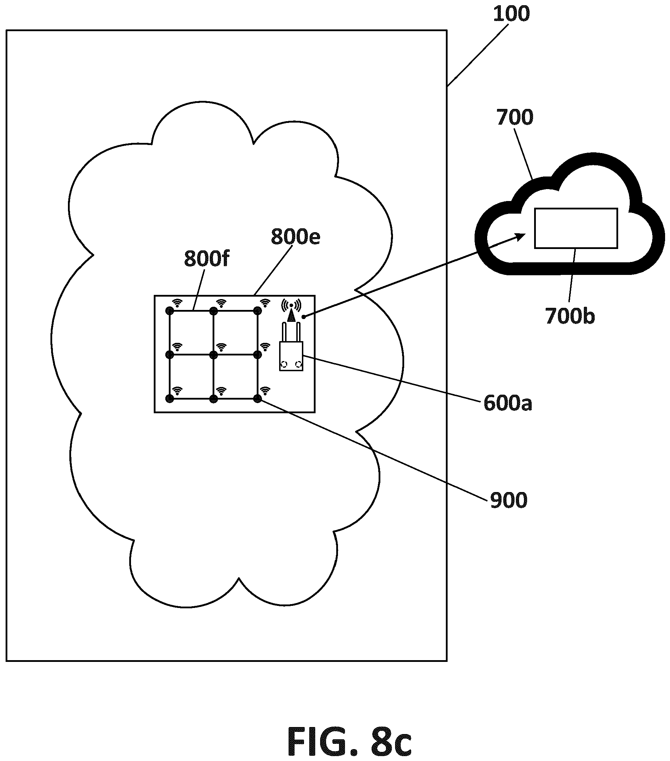

Figure 8A shows a schematic plant view of a greenhouse gas calibration system for a WWTP having small-size reactors. The calibration system is based on sensors. Figure 8B shows a schematic plant view of a greenhouse gas calibration system for a WWTP having big-size reactors. The calibration system is also based on sensors. Figure 8C shows another schematic plant view of a greenhouse gas calibration system based on sensors for a WWTP having big-size reactors.

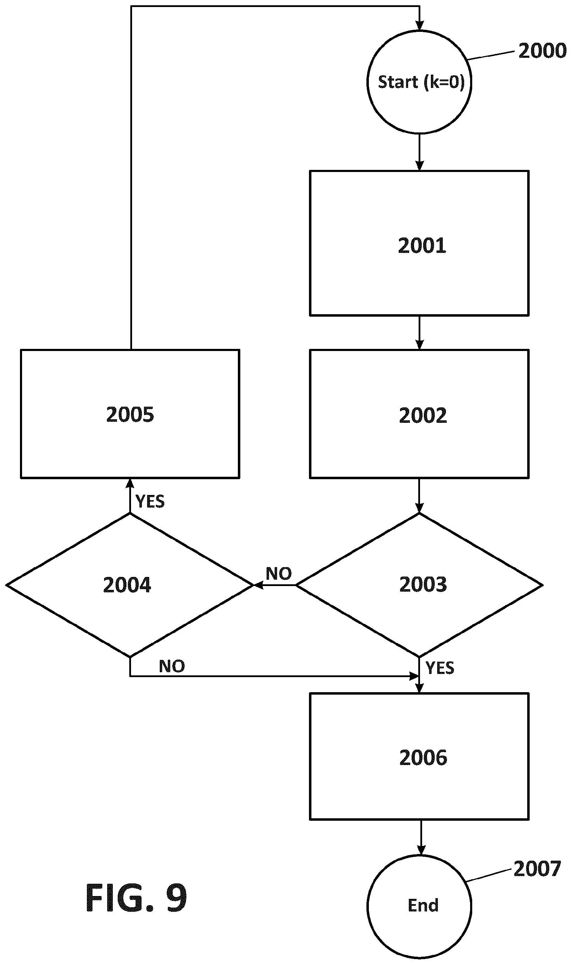

Figure 9 shows a flow diagram of an algorithm for gas calibration 700b, in charge of determining the average concentration of gas emitted in the WWTP reactor in each cubic meter of the atmosphere (mg/m³).

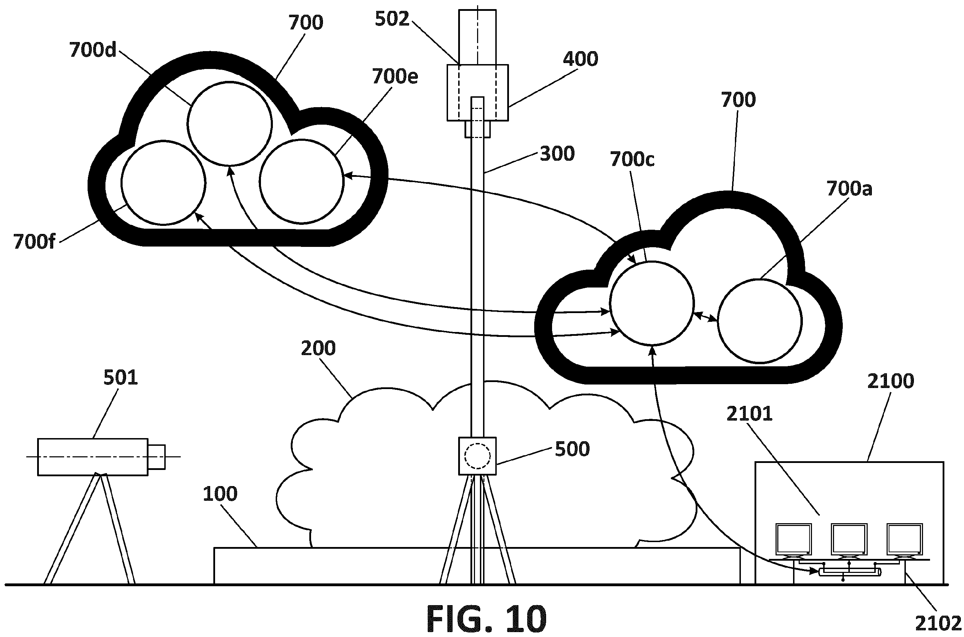

Figure 10 shows a schematic plant view of an intelligent, multivariable control system for a WWTP according to an embodiment of the present invention. An intelligent, multivariable control algorithm is housed and executed in the cloud.

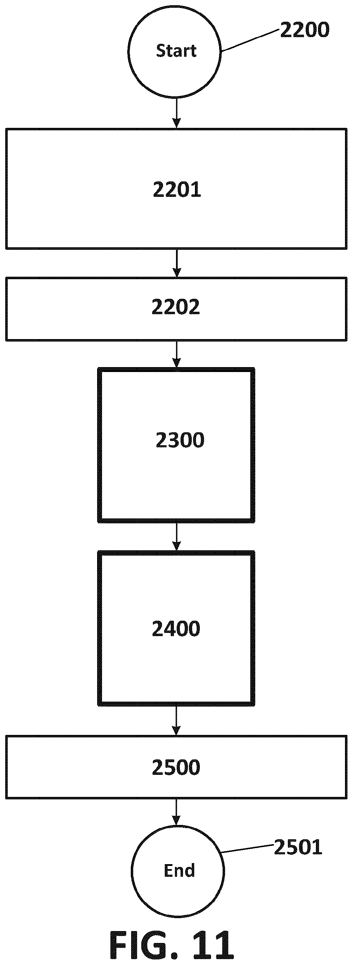

Figure 11 shows a flow diagram of an algorithm for intelligent, multivariable control of a WWTP according to an embodiment of the invention. It is in charge of determining at every time instant t optimized operating parameters of the WWTP.

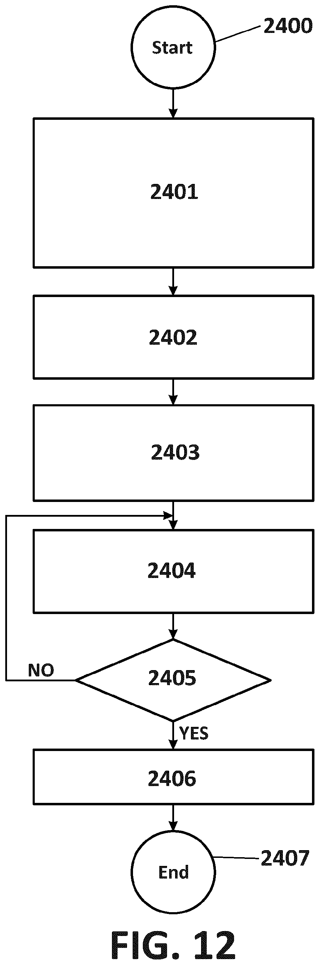

Figure 12 shows a flow diagram of an algorithm for mathematical optimization for performing a mathematical optimization based on the simulation of a WWTP model, that provides optimal operation parameters for every time instant t, determined by the algorithm for intelligent, multivariable control of figure 11.

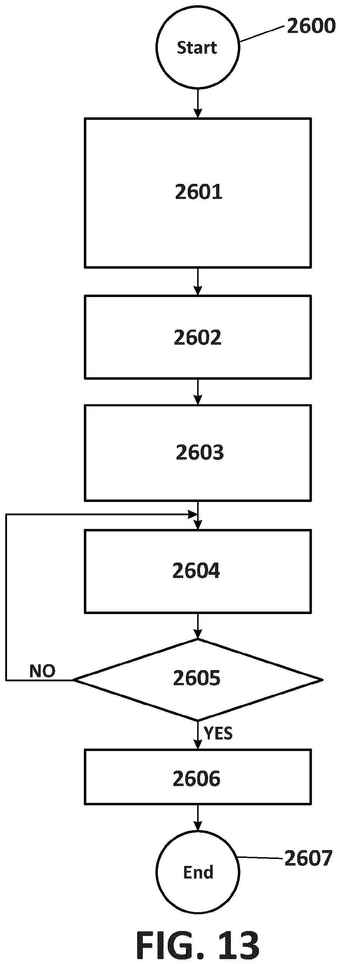

Figure 13 shows a flow diagram of an algorithm for generating a WWTP model used by the algorithm for intelligent, multivariable control of figure 11.

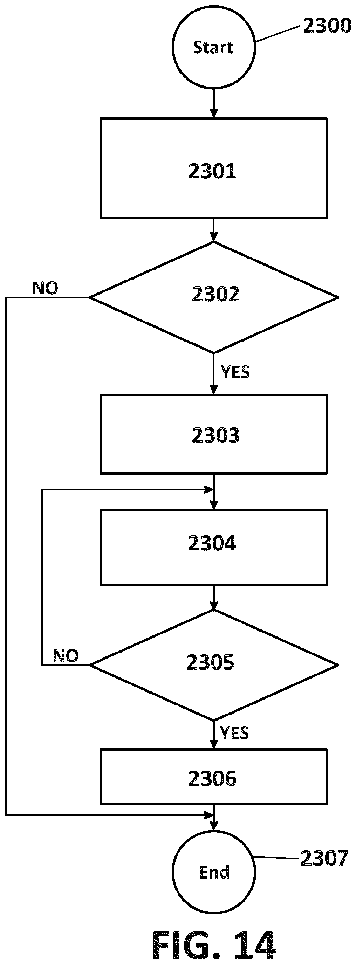

Figure 14 shows a flow diagram of an algorithm for calibrating the WWTP model used by the algorithm for intelligent, multivariable control of figure 11.

### DESCRIPTION OF AN EMBODIMENT OF THE INVENTION

Figures 1A and 1B schematically show a reactor 100 of a wastewater treatment plant (WWTP) emitting greenhouse (GHG) gases and a system 10 for online quantification of GHC emissions produced in the WWTP. The system 10 is composed of three thermographic cameras 500, 501, 502 installed for quantifying the emission of GHG in the proximity of the reactor 100. The cameras 500, 501, 502 are installed in the vicinity of the reactor 100, preferably forming a right angle (90°) between each other, so that their respective targets are located perpendicular to the three planes XZ, YZ and XY which make up the space, respectively. In the particular embodiment shown in figures 1A-1B, the section of reactor 100 is rectangular and cameras 500 and 501 are located in the geometric centers of two of the sides of the reactor 100 perpendicular to each other. The reactor 100 may take any other section, such as circular.

Cameras 500 and 501 are preferably supported on supporting means, such as tripods 400a. The height at which cameras 500 501 are located and their distance with respect to the edges of the reactor 100 depends on the size of the reactor 100. The height may vary for example between 1.5 m and 2.5 m and their distance to the edges of the reactor 100 may vary for example between 3 m and 5 m of the edges of the reactor 100, depending on whether it is a small size reactor (a small-size reactor being defined as having sides or diameters equal to or less than 25 meters) or a large size reactor (a large-size reactor being defined as having sides or diameters greater than 25 meters). For WWTP reactors having sides or diameters greater than 100 meters, it may be necessary to install more than one camera 500 and/or 501 on these sides.

The third camera 502 is preferably installed on a bridge bar 300 positioned from end-to-end along a side (preferably, the shortest) of the rectangle formed by the reactor 100. If the section of the reactor is not rectangular, the bridge bar is positioned from end-to-end of an imaginary line above the section of the reactor. For example, if it has circular section, the bridge bar 300 is positioned along a diameter of the circular section of the reactor. The height of the bridge bar 300 may vary depending on the size of the reactor 100. The height may vary for example between 5 and 10 meters, depending on whether it is a small size reactor (for example having sides or diameters equal to or less than 25 meters) or a large size reactor (for example having sides or diameters greater than 25 meters). For WWTP reactors having sides or diameters greater than 100 meters, it may be necessary to install camera 502 at a height greater than 10 meters. For such large reactors having sides or diameters greater than 100 meters, depending on the height at which the bridge bar 300 is positioned, more than one camera 502 may be required. For example, if it is not desired to exceed a height greater than 20 m for the bridge bar 300, more than one camera 502 may be required. In reactors 100 having rectangular section, the bridge bar 300 is preferably positioned parallel to the shortest side of the reactor 100 and perpendicular to the longest side of the reactor 100. Camera 502 is preferably installed upside down in a receptacle 400b disposed substantially in the middle (geometric center) of the bridge bar 300, in such a way that the camera 502 is disposed perpendicular to the XY plane, that is to say, perpendicular to the surface of the water sheet of the reactor 100. In this way, the camera 502 is located in the geometric center of the reactor 100 of the WWTP.

The images taken by the thermographic cameras 500, 501, 502 are then processed according to methods of the invention described in detail later in this text. The thermographic cameras preferably operate at the mid-wavelength infrared (MWIR) band, that is to say, at wavelengths varying between 3 µm and 5 µm. In this band, the cameras are capable of detecting the N₂O, CO₂ and CH₄ gases. The triangular configuration enables the obtaining of a volumetric, three-dimensional image of the plume of the gas emitted into the atmosphere. As will be explained according to methods of the invention, the volumetric, three-dimensional image, once processed and normalized, provides quantitative information on the emission of GHG produced in the WWTP reactors.

Figures 1A-1B schematically show the greenhouse gases plume 200 emitted from the reactor 100 of the WWTP. Each camera 500, 501, 502 takes 2D thermographic images perpendicular to the XZ, YZ and XY planes in space, of the gases plume 200 emitted from the reactor 100 and sends them to the cloud, as shown in figure 2. The images are processed in the cloud according to methods that are described next.

Camera 500 takes 2D frontal images of the greenhouse gases plume 200 from the axis OX and perpendicular to the plane XZ in space. As shown in figure 2, which shows the view of the system 10 of figure 1A, these images are sent in digital format, online, by means of a communication device 601 comprised (such as embedded or attached) in the camera 500, to a repeater 600a, which in turn sends the images, also in digital format and online, to a server in the cloud 700. The communication device 601 is preferably a wireless communication device, in which case the repeater 600a is a repeater implementing a wireless communications protocol, such as Wi-Fi. The server in the cloud 700 houses a gas quantification algorithm 700a which implements a method of the invention. When executed, this gas quantification algorithm 700a normalizes each original image, obtaining a 2D digital image (2D surface) 200a and its projection 200a' in a plane corresponding to the opposite side of a virtual cube formed by the planes XZ, YZ and XY and their projections. This is shown in figures 3A-B, 4A-B and 5A-B.

Figure 3A shows a 2D surface 200a obtained from an image of a GHG plume formed in a reactor of a WWTP in a certain time instant, taken by camera 500, once the gas quantification algorithm 700a has been applied in the cloud 700. In other words, the image taken by camera 500 and sent to the cloud 700 has been digitalized and normalized by gas quantification algorithm 700a. The gas quantification algorithm 700a also makes a 2D projection 200a' of the 2D surface 200a in the XY plane.

In turn, cameras 501 and 502 take respective images of the GHG plume formed in the reactor 100 and send them to the cloud 700, where they are processed in a similar way. Camera 501 takes front images of the greenhouse gases plume from the axis OY and perpendicular to the plane YZ in space. These images are sent in digital format, online, by means of a communication device 602 comprised (such as embedded or attached) in the camera 501, to repeater 600a, which in turn sends the images, also in digital format and online, to the server in the cloud 700. Like communication device 601, communication device 602 is preferably a wireless communication device. The gas quantification algorithm 700a executed in the cloud 700 normalizes each original image, obtaining a 2D surface 200b (see figure 4A) and its projection 200b' (se figure 4B) in a plane corresponding to the opposite side of a virtual cube formed by the planes XZ, YZ and XY and their projections. So, each image taken by camera 501 and sent to the cloud 700 is digitalized and normalized 200b by gas quantification algorithm 700a. The gas quantification algorithm 700a also makes a 2D projection 200b' of the 2D image 200b in the YZ plane.

Similarly, camera 502 takes front images of the greenhouse gases plume 200 from the bridge bar 300, preferably from its geometric center because the camera 502 is preferably disposed in its geometric center. These images are sent in digital format, online, by means of a communication device 603 comprised (such as embedded or attached) in the camera 502, to repeater 600a, which in turn sends the images, also in digital format and online, to the server in the cloud 700. Like communication devices 601 and 602, communication device 603 is preferably a wireless communication device. The gas quantification algorithm 700a executed in the cloud 700 normalizes each original image, obtaining a 2D surface 200c (see figure 5A) and its projection 200c' (se figure 5B) in a plane corresponding to the opposite side of a virtual cube formed by the planes XZ, YZ and XY and their projections. So, each image taken by camera 502 and sent to the cloud 700 is digitalized and normalized 200c by gas quantification algorithm 700a. The gas quantification algorithm 700a also makes a 2D projection 200c' of the 2D image 200c in the XZ plane.

Next, a method of gas quantification for determining the mass flow of the GHG emitted into the atmosphere by the reactor 100 at time instant is explained. The method implements the gas quantification algorithm 700a. A flow diagram of the method of gas quantification is schematized in figure 7A. This method is in charge of processing the 2D images captured by the cameras 500, 501 and 502. This method is based on a digital image correlation technique. More precisely, it is based on the digital volumetric correlation of 3D images obtained from the 2D surfaces 200a, 200a', 200b, 200b', 200c, 200c' (see figures 3A, 3B, 4A, 4B, 5A, 5B) in turn obtained from the images captured by cameras 500, 501 and 502. The digital volumetric correlation of 3D images is used for finding out differences between a 3D (obtained at time instant t+1) image and the former one (obtained at time instant t). The method is started (stage 1000) at a certain time instant t. At time instant t, a 2D image taken by camera 500 is read ant stored in a database (stage 1001a), a 2D image taken by camera 501 is read ant stored in a database (stage 1001b) and a 2D image taken by camera 502 is read ant stored in a database (stage 1001c). From the 2D images obtained from respective cameras 500, 501, 502, a 3D image of the plume of the GHG emitted at time t is obtained and stored in a database at stage 1010. An exemplary 3D image is shown in figure 6. Figure 6 shows a 3D image representing the plume of the GHG emitted at time t by the reactor 100, obtained from the reconstruction of 2D images 200a, 200a', 200b, 200b', 200c, 200c'. The shown 3D image is a digitized, normalized image. In figure 6 the directrix, contour lines and generatrix formed to obtain the 2D surfaces from the images provided by the cameras 500, 501 and 502 are shown. Stage 1010 is explained in detail in figure 7B. From the 3D image of the plume of the GHG emitted at time t (stage 1010), an algorithm for obtaining differences between 3D images of the plume of the GHG emitted into the atmosphere by the reactor of the WWTP at time instants t and t-1 and for storing those differences in a database is applied (stage 1020). This algorithm is an algorithm of digital image volumetric correlation. Stage 1020 is explained in detail in figure 7C. Finally, from those differences between 3D images at time instants t and t-1, an algorithm for obtaining an instantaneous mass flow (mg/s) of the GHG emitted into the atmosphere by the reactor of the WWTP at time instant t, and for storing the results in a database is applied (stage 1030). Stage 1030 is explained in detail in figure 7D. The method of gas quantification for determining the mass flow of the GHG emitted into the atmosphere by the reactor 100 at time instant t is thus ended (stage 1040).

Figure 7B shows a flow diagram of a portion of the method of gas quantification of figure 7A, in which stage 1010 (obtaining a 3D image) is more detailed. In other words, in figure 7B the algorithm for obtaining a 3D image of the plume of the GHG emitted into the atmosphere by the reactor of the WWTP at time t is explained in detail. As already explained regarding figure 7A, at time instant t, a 2D image taken by camera 500 is read ant stored in a database (stage 1001a), a 2D image taken by camera 501 is read ant stored in a database (stage 1001b) and a 2D image taken by camera 502 is read ant stored in a database (stage 1001c). From the 2D images obtained from respective cameras 500, 501, 502, firstly, 2D surfaces 200a, 200a', 200b, 200b', 200c, 200c' and their respective contour surfaces need to be obtained. This is done by first (stages 1012a, 1012b, 1012c) obtaining a directrix for each 2D image captured by each camera 500, 501, 502 at time instant t and then (stages 1013a, 1013b, 1013c) obtaining, contour lines parallel to the directrix of respective 2D images, and corresponding contour surfaces. The directrix for each 2D image (stages 1012a, 1012b, 1012c) are obtained by applying systems identification (neural network). In stages 1013a, 1013b, 1013c the respective directrixes and corresponding contour lines and contour surfaces are stored in a database. Secondly, various volumetric surfaces and associated partial solids are constructed by superimposing the contour lines (or curves parallel to the directrix) and corresponding contour surfaces associated to each of the three 2D images obtained from respective cameras 500, 501, 502, and the generatrixes that are formed when passing through each of the points of each contour line. By fitting the obtained volumetric surfaces and associated partial solids, the final solid or volume 200' corresponding to the GHG plume 200 is obtained (stage 1014).

In other words, in order to obtain the 2D surfaces 200a, 200a', 200b, 200b', 200c, 200c' and their respective contour surfaces from which the resulting 3D images are obtained, a mathematical equation or non-linear model corresponding to each of the three original 2D images provided by cameras 500, 501 and 502 is determined. This is done by applying system identification techniques (stages 1012a, 1012b, 1012c in figure 7B). In particular, this is done by applying a recurrent artificial neural network (ANN) having supervised learning and discrete data processing capacity. In particular, the combination of the three 2D images is introduced into the artificial neural network, taking into account their main approximate angles of curvature. The equation obtained in respective stages 1012a, 1012b and 1012c represents the directrix of the surface to be constructed. In other words, in stage 1012a a directrix (or 2D image non-linear model) for the 2D image obtained from camera 500 is obtained; in stage 1012b a directrix (or 2D image non-linear model) for the 2D image obtained from camera 501 is obtained; and in stage 1012c a directrix (or 2D image non-linear model) for the 2D image obtained from camera 502 is obtained. The three directrixes are stored in a database. Next (stages 1013a, 1013b, 1013c), various volumetric surfaces and associated partial solids are constructed by superimposing the contour lines (or curves parallel to the directrix) and corresponding contour surfaces associated to each of the three 2D images obtained from respective cameras 500, 501, 502, and the generatrixes that are formed when passing through each of the points of each contour line. In other words, in stages 1013a 1013b, 1013c, for each 2D image captured by each camera 500, 501, 502 at a time instant t, the contour lines and corresponding contour surfaces parallel to the directrix are obtained, and the generatrixes are also obtained. They are stored in a database. Finally, once the volumetric surfaces and associated partial solids have been created, a corresponding solid or volume 200' is obtained (stage 1014). This solid or volume 200' represents the 3D image corresponding to the GHG plume 200. The output of stage 1014 in figure 7B corresponds to the output of stage 1010 in figure 7A.

Referring again to figure 7A, an algorithm for obtaining differences between consecutive (obtained at time instants t-1, t) 3D images (obtained at stage 1010) of the plume of the GHG emitted into the atmosphere is applied (stage 1020). Figure 7C shows a flow diagram of stage 1020 in figure 7A. In other words, in figure 7C the algorithm for obtaining differences between 3D images of the plume of the GHG emitted into the atmosphere by the reactor of the WWTP at time instants t and t-1, is explained in detail. First, the 3D image corresponding to the plume of the GHG emitted into the atmosphere at time instant t is received (stage 1021). Then, at stage 1022 a genetic optimization algorithm for maximizing an interpolated correlation coefficient is executed. If such maximization is not obtained (stage 1023), the algorithm comes back to stage 1022, in order to execute again the genetic optimization algorithm. This is repeated until an optimized interpolated correlation coefficient is obtained. When such maximization is obtained, differences between 3D images in time instant t and t-1 are obtained and the result is stored in a database (stage 1024).

Turning back to figure 7A, the method for quantifying gases (algorithm 700a of figure 2) ends with stage 1030, in which an algorithm for obtaining the mass flow of GHGs emitted by the reactor 100 of the WWTP at time instant t is completed. This algorithm for obtaining the mass flow is described in figure 7D. First, the differences between 3D images in time instant t and t-1 are received (stage 1031). Then, in stage 1032, the volumetric image flow rate of the GHG emission produced in the WWTP reactor at time t is determined (m³/s). This volumetric image flow rate is obtained by processing the identified volumetric differences between the 3D images of the time instant t and the time instant t-1 (t> 0) obtained in stage 1024 of figure 7C. Then, the quantification measure of the GHG emissions emitted in the WWTP reactor, that is to say, the instantaneous mass flow (mg/s) at time instant t, is obtained in stage 1033 from a calibrated and normalized parameter of gas concentration per cubic meter of image (mg/m³) and from the volumetric image flow rate of GHG emission at time instant t (m³/s) determined in stage 1032.

The concentration of gas per cubic meter of image (mg/m³) previously indicated and used to obtain the instantaneous mass flow (in units of mg/s) at time t, is preferably obtained by applying a previous calibration process carried out in a start-up stage. The calibration process is disclosed next with reference to figure 9, describing the algorithm for gas calibration 700b. In order to carry out the calibration, a calibration system comprising gas sensors 900 positioned forming a matrix on the reactor 100 is used. Different configurations of calibration systems are shown in figures 8A, 8B and 8C. The calibration system may vary depending on the size of the reactor 100. Figure 8A shows a schematic plant view of a GHG calibration system for a WWTP having small-size reactors 100, that is to say, reactors whose section has sides or diameters equal to or less than 25 meters. This calibration system includes a set of cables 800a fixed to safety handrails 800b surrounding the reactor 100 or to a set of vertical poles 800c provided with counterweights 800d around the reactor (for example at the edges thereof). The cables 800a may be fixed to handrails 800b or to vertical poles 800c depending on the vertical distance or height existing between the maximum height of the water sheet of the reactor 100 and the one upper end of safety handrail 800b. If the maximum height of the water sheet is less than a certain height, for example less than 3 m, it is necessary to use vertical poles 800c, such as extension rods, so that the sensors 900 are positioned at a suitable height above the water sheet of the reactor 100. The cables 800a are placed preferably aligned, forming a matrix, from end to end of opposite ends of the reactor. The cables 800a are disposed both from end to end of the shortest sides of the reactor and from end to end of the longest sides of the reactor (assuming a particular embodiment of a reactor having rectangular section). The sensors 900 are preferably disposed at a distance of between 5 and 6 m from each other, thus forming a matrix which gives rise to niches of area between 30 m² and 36 m² approximately.

Figure 8B shows a schematic plant view of a GHG calibration system for a WWTP for a WWTP having large-size reactors 100, that is to say, reactors whose section has sides or diameters greater than 25 meters. This calibration system includes a floating platform 800e on which an array or matrix 800f of sensors 900 is installed. Preferably, the array 800f of sensors 900 is shaped such that niches of approximately 36 m² area are formed. Figure 8C also shows a GHG calibration system based on sensors for a WWTP having big-size reactors. The sensors 900 transmit in real time captured data related to atmospheric gas concentration in the environment in which the sensors are disposed to repeating means 600a through which data are sent to a server in the cloud 700. For this purpose, the sensors include embedded communication devices, preferably wireless communication devices, for data transmission and reception. The repeating means 600a is also preferably wireless. The server in the cloud 700 houses an algorithm for gas calibration 700b, in charge of obtaining the average concentration of gas emitted in the WWTP reactor in each cubic meter of the atmosphere (mg/m³). Calibration systems for small-size reactors also include communication devices for data transmission/reception to/from the cloud 700.

Once the calibration system (either according to figure 8A or to figure 8B) is installed, it is operated in time cycles, for example in 24 h cycles. The number of cycles is dependent on the calibration result obtained by the calibration algorithm described below and on the size of the reactor 100. In a small reactor 100 the calibration system (sensors 900) covers the entire reactor 100. This means that in each calibration cycle the reactor 100 is swept in its entirety by the sensors. Therefore, the number of cycles to be performed depends on the calibration accuracy obtained after n cycles. In a large reactor 100, the sensor system 900 covers only a limited area of the reactor upper surface. This means that in order to be able to sweep the reactor 100 in its entirety, the sensor system 900 must be shifted over time from one zone to another zone of the reactor 100. If in order to sweep the reactor's upper surface 100 completely it is necessary to carry out m physical displacements, so at least m calibration cycles of 24 hours will be carried out. If in each calibration zone it is necessary to carry out nₘ calibration cycles per calibration zone, then it will be necessary to carry out m* nₘ calibration cycles of 24 hours. In a particular implementation, sensors 900 capture and output data (to be processed in the cloud) at a sampling frequency preferably varying between 10 and 5 Hz (between every 100 ms and 200 ms).

Referring now to the flow diagram of figure 9, it represents an algorithm for gas calibration 700b, in charge of determining the average concentration of gas emitted in the WWTP reactor in each cubic meter of the atmosphere (mg/m³). For simplicity purposes, it is described for a 24-hour cycle. In a first stage 2001, the data transmitted by all the sensors 900 during the complete cycle of k = 24 h are read and stored (at the sampling rate) in a database. Next, in stage 2002, the mean value of gas concentration per cubic meter of image (mg/m³) for each individual sensor is calculated for a cycle k, as well as the total mean value (including all the sensors) of gas concentration per cubic meter of image (mg/m³), for cycle k. These values are statistically analyzed over time. If (stage 2003) the gas concentration per cubic meter of image (mg/m³) accuracy for each individual sensor and the gas concentration per cubic meter of image (mg/m³) accuracy of the total mean value is within a certain range, or a maximum number of cycles kₘₐₓ has been reached (stage 2004), then a mean value of gas concentration per cubic meter of image (mg/m³) is determined (stage 2006) and the calibration is terminated (stage 2007). If (stage 2003) the gas concentration per cubic meter of image (mg/m³) accuracy for each individual sensor and the gas concentration per cubic meter of image (mg/m³) accuracy of the total mean value is not within a certain range and a maximum number of cycles kₘₐₓ has not been reached (stage 2004), then an analysis of the areas (covered by sensors) in which largest gas concentration per cubic meter of image (mg/m³) accuracy misalignments have occurred is performed, and optionally physical recalibration of the involved sensors is suggested (stage 2005). The gas concentration per cubic meter of image (mg/m³) accuracy criterion is determined by applying a standard deviation based statistical analysis. The standard deviation is calculated for two sets of discrete samples: (i) the total set of values of all sensors 900, in which case the population standard deviation formula is applied; ii) the total set of values of each sensor 900 of the set of sensors that make up the calibration system, in which case the standard deviation formula is applied. Both calculations are carried out at two levels: for the current cycle k and for all cycles analyzed up to that time. Preferably, the criterion of stop or criterion of convergence of the calibration process by accuracy is determined on the basis of deviation values up to 15%. If the stop or convergence criterion is not met and the maximum number of cycles kₘₐₓ has not been reached, a next k+1 calibration cycle is carried out, preferably performing a physical calibration of the sensors whose deviation is above a certain threshold (for example greater than 40%) (stage 2005). Once the calibration is completed, the average concentration of GHGs emitted in the WWTP (for example in units of mg/m³) is determined. This value is used by the gas quantification method as described in figure 7A (stage 1030) and by the method for obtaining the mass flow of GHGs emitted in the reactor at time t (figure 7D) corresponding to step 1030 of the main algorithm and described in figure 7D.

Once the calibration process for obtaining an average GHG emission concentration is finished and the emission quantification system based on the triangular configuration of thermographic cameras is installed and ready to capture and process images, a method for real-time intelligent and multivariable control for WWTP, referred to as 700c, can be executed in the cloud 700, as described with reference to figures 10 and 11.

Figure 10 illustrates a general overview of the intelligent and multivariable control system of the invention, including the algorithm for gas quantification 700a housed in the cloud 700 an the above mentioned algorithm for real-time intelligent and multivariable control for WWTP 700c, as well as its connection to a monitoring and control system (such as SCADA) 2101 housed in a Control Center 2100 of the WWTP for collecting process data from the monitoring and control system (from now on, referred to as SCADA). Among others, the following information is or can be collected from the SCADA 2101 (online data measured by sensors connected to the SCADA): total ammonium concentration (NH₄+) in the effluent; total Phosphorus concentration (TP) in the effluent; dissolved oxygen (DO) in aerobic reactors; Concentration of nitrates (NO₃⁻) in anoxic reactors; suspended solids concentration of the mixed liquor (MLSS). The algorithm 700c for the intelligent and multivariate control of a WWTP collects the GHG emission quantification data determined by the algorithm for gas quantification 700a. Similarly, the algorithm 700c for the intelligent and multivariate control of a WWTP also collects from external computing systems (generally represented in figure 10 in the cloud, although they may alternatively belong to a proprietary network, in sum, either a public or private cloud) process data and discharge quality data provided by algorithm 700f, data corresponding to hourly electrical tariffs (rates) provided by algorithm 700d and meteorological data provided by algorithm 700e, corresponding for example to hourly, daily, weekly and biweekly weather prediction.

As shown in figure 11, the algorithm 700c for the intelligent and multivariable control for optimizing the operation of a WWTP starts (stage 2200) and reads (stage 2201) from the monitoring and control system (SCADA) 2101 a set of optimization priorities established by the persons responsible for the operation of the WWTP. It is possible to define up to four optimization objectives individually or simultaneously. At least one, preferably at least two, and more preferably all of the following criteria (objectives) are optimized:
1. Maximum quality of effluent, in order to maximize the quality of the effluent, defined by at least one, preferably at least two, and more preferably all of the following parameters: Chemical Oxygen Demand (COD) or Biological Oxygen Demand (BOD₅, BOD analyzed at 5 days), Total Suspended Solids (TSS), Total Nitrogen (TN), Nitrates (NO₃⁻), Ammonium (NH₄) and Total Phosphorus (TP).
2. Maximum energy efficiency, in order to maximize energy efficiency, defined by the total energy consumption of the WWTP in kWh per m³ of treated wastewater.
3. Maximum economic efficiency, in order to maximize the economic efficiency, defined by the total cost of operation of the WWTP (in euros per m³ of treated wastewater).
4. Minimum GHG emission, in order to minimize the GHG emissions from the WWTP, quantified by the gas quantification algorithm 700a (mg/s).

Next (stage 2202), the algorithm 700c for the intelligent and multivariable control of the WWTP captures all of the above-mentioned WWTP process online data, including the GHG emissions data determined by the algorithm 700a for gas quantification, the algorithm for obtaining the hourly electric rate data 700d, the algorithm for obtaining meteorological data 700e and the algorithm for process data and discharge quality data 700f. These data are virtualized, that is, replicated and stored in a remote database and decoupled from the database of the WWTP, thus feeding the database on which the data analysis performs the optimization algorithm of the algorithm 700c for the intelligent and multivariable control of a WWTP (stage 2400 and figure 12).

After stage 2202, the algorithm 700c for the intelligent and multivariate control of a WWTP is ready to execute the algorithm for optimization (stage 2400). The optimization is carried out from the process data and discharge quality data provided by algorithm 700f, electric tariff rate data provided by algorithm 700d, meteorological data provided by algorithm 700e and instant values of mass flow of the greenhouse gases provided by algorithm 700a. Preferably, the calibration of the WWTP model is previously executed (stage 2300). In stage 2300, the capacity of reproducing the WWTP model by simulation is analyzed. It represents the basis of the optimization algorithm, since it provides it with predictive capacity.

The generation of the WWTP model, as well as the calibration of the volumetric flow rate of the GHG emission, are preferably carried out prior to the execution of the algorithm for intelligent and multivariable control of the WWTP. Continuous verification of the reproduction capacity of the model and of the need for a new calibration of the model is performed during execution of the algorithm for intelligent and multivariable control of the WWTP, if applicable.

Figure 13 shows a flow diagram of the algorithm for generating a WWTP model according to an embodiment of the invention. Figure 13 depicts such a generation process of the WWTP model. Once started (stage 2600), the model generation process collects and at the same time virtualizes all the historical data of the available WWTP (process data, discharge quality data, energy data, economic data, GHG emissions data, energy tariff data, meteorological data). This is done at stage 2601. In the context of the present invention, virtualization refers to storing in a remote database, dissociated from the WWTP database. Such historical data, generally available in large quantities from both online acquisition and communication systems and process (such as sensors, meters and analyzers that are installed online), as well as off-line systems (such as laboratory analytical management systems, process and equipment maintenance management systems, or incident management systems), are heterogeneous, have a very diverse nature, are acquired and recorded at different sampling frequencies, so that in order to use them in combination, it is necessary to normalize them. The method for model generation described in figure 13 normalizes the types, time base, sampling frequency and scale of the data (stage 2602). In step 2603, the normalized historical data is fed into a WWTP model generator which, like the algorithm 700a for gas quantification, in charge of reconstructing the 3D image 200' corresponding to the GHG gases emitted into the atmosphere by the reactor 100 of the WWTP (described in figure 7B), uses them in a recurrent artificial neural network having supervised learning and discrete data processing capacity. A model of the WWTP is thus generated. The generation of the model, carried out in stages 2603 to 2606 (figure 13), is an iterative process that ends when a faithful reproduction of the model is achieved and checked against the actual data off the WWTP. The criterion of stop or criterion of convergence is based on the analysis of the standard deviation of the main operational variables of the process (discharge (Chemical Oxygen Demand (COD) or Biological Oxygen Demand (BOD₅, BOD analyzed at 5 days), Total Suspended Solids (TSS), Total Nitrogen (TN), Nitrates (NO₃), Ammonium (NH₄+) and Total Phosphorus (TP)) and intermediate process variables (such as dissolved oxygen (DO) concentration in aerobic reactors and blowers aeration flow rate, concentration of nitrates (NO₃⁻) in anoxic reactors, concentration of the mixed liquor suspended solids (MLSS), internal recirculation flow rate, external recirculation flow rate; energy consumption; GHG emissions), analyzing the standard deviation variable to variable and at sets of variables that have a known correlation per process. A criterion of stop or convergence is established having a certain standard deviation (for example, of 15%) for the individual variables analyzed and a certain standard deviation (for example, of 20%) for the correlated sets of variables. Once the artificial neural network has converged, it is considered that the WWTP model is defined and ready to be simulated by the optimization algorithm (figure 12) of the algorithm for the intelligent and multivariate control of a WWTP.

In relation to the algorithm for generating a WWTP model of figure 13, figure 14 shows a flow diagram of an algorithm for calibrating the WWTP model used by the algorithm for intelligent, multivariable control of figure 11 (stage 2300). This algorithm for calibrating the WWTP model (figure 14) is aimed at determining whether it is necessary or not to calibrate again the model prior to executing the optimization algorithm (step 2400 of figure 11). The WWTP model calibration algorithm of figure 14 is equivalent to the WWTP model generating algorithm of figure 13, differing from this latter algorithm in an initial stage 2302 of verification of the need for calibration. In this stage 2302 of verification of the need for calibration, the criteria for reproducibility fidelity of the simulation are analyzed with respect to the actual data of the WWTP based on the analysis of the standard deviation. It also differs from the above mentioned algorithm in the set of new historical data virtualized since the last calibration. This algorithm for calibrating the WWTP model (figure 14) endows the intelligent and multivariate control system with real-time model autocalibration capability, providing it with a very high degree of robustness and reliability.

Finally, figure 12 describes the mathematical optimization algorithm, in charge of the continuous and real-time optimization of the main operating parameters offered by the intelligent and multivariable control system. The mathematical optimization is based on a simulation of a WWTP model, which results in a set of optimal operation parameters determined by the intelligent and multivariable control system and method, at each time instant t. Among the operating variables to be optimized are some or all the following: control loop setpoint for effluent ammonium (NH₄⁺) concentration; control loop setpoint for ferric chloride dosage (FeCl₃) for physicochemical phosphorus removal at the end of the biological treatment; control loop setpoint for DO concentration of aerobic reactors; control loop setpoint for nitrate (NO₃⁻) concentration in the anoxic reactors or internal recirculation flow rate; control loop setpoint of mixed liquor solids concentration (MLSS) or SRT (solids retention time); HRT (hydraulic retention time); flow rate of the blowers, operating pressure of the blowers. At least one, preferably at least two, and more preferably all of the former operating variables are simultaneously optimized.

Once initiated (stage 2400), the mathematical optimization algorithm defines (stage 2401) an objective function of the mathematical optimization to be carried out based on the priorities of the optimization criteria established by the persons responsible for the operation of the WWTP and on their corresponding restrictions. This is done through the SCADA 2101 housed in the control center 2100 of the WWTP, as indicated in figure 10. In regards to the optimization criteria, the algorithm considers four types: 1) criteria of optimization of treated wastewater quality (effluent quality in absolute terms, effluent quality in relative terms or discharge yield); 2) energy optimization criteria (minimization of energy consumption, maximization of energy efficiency, optimization of the energy balance between consumption and energy production); 3) economic optimization criteria (minimization of the economic cost of the energy consumed, maximization of the economic benefit of the energy produced, maximization of the cost-benefit ratio of the balance between energy consumed and energy produced, minimization of consumption of chemical reagents); 4) air quality criteria or GHG emissions (emission of N₂O, CO₂ and/or CH₄). Such optimization criteria are set in the form of objective function (single-objective or multi-objective). At least one, preferably at least two, and more preferably all of the following operation variables of the wastewater treatment plant are optimized (2400): control loop setpoint for effluent ammonium (NH₄⁺) concentration; control loop setpoint for ferric chloride dosage (FeCl₃) for physicochemical phosphorus removal at the end of the biological treatment; control loop setpoint for DO concentration of aerobic reactors; control loop setpoint for nitrate (NO₃⁻) concentration in the anoxic reactor or internal recirculation flow rate; control loop setpoint of solids concentration in the mixed liquor (MLSS) or SRT (solids retention time); HRT (hydraulic retention time); flow rate of the blowers; and operating pressure of the blowers.

Once the people responsible for the operation of the WWTP have established the optimization criteria and their priorities through the SCADA 2101 housed in the Control Center 2100 of the WWTP (figure 10), the process of mathematical optimization starts. The mathematical optimization is performed in stages 2402 to 2406 (figure 12) by means of an evolutionary optimization algorithm, namely, a genetic algorithm that is executed iteratively and whose criterion of stop or convergence is given by no longer improvement of the population. In step 2402, a genetic algorithm is constructed, which implies constructing the initial population of chromosomes, the evolution rules of said chromosomes, and the criteria of stop or convergence. The chromosomes of the population represent the operating variables to be optimized, while the stop criteria are defined based on the objective function. The chromosomes have results (a set of values for the variables to be optimized) associated thereto. The target function (objective function) has already been defined in stage 2401, based on the set of optimization priorities (variables to be optimized). The criterion of stop is based on checking that the population of the set of chromosomes does not improve, that is to say, that the genetic optimum has been achieved (the values of the variables to be optimized cannot be improved). In sum, the variables that form the target function are the variables under evaluation in each cycle of execution of the genetic algorithm.

Once the genetic algorithm is constructed (stage 2402), the optimization process starts. In step 2403, the last available WWTP data set is retrieved and the initial start point is set. In particular, the simulator to be launched by the genetic algorithm in each iteration of the mathematical optimization is fed with the last online available data of the WWTP and with the necessary historical data. In stage 2404 the mathematical optimization process is started by launching the genetic algorithm and executing it iteratively until it reaches the convergence criterion. In each iteration, the operation of the WWTP is simulated using the previously generated and calibrated WWTP model. Once the convergence criterion has been reached, the execution of the genetic algorithm is stopped. The mathematical optimization process is also stopped. The values of the operation variables represented by the best chromosome sets represent the optimal solution and, therefore, the optimal values of the operating variables. These optimum operating values determined by the optimization algorithm (figure 12) are sent in real time to the SCADA 2101 housed in the control center 2100 of the WWTP (figure 10), so that they can be used to command the corresponding control loops in optimized manner.

In this way, the real-time intelligent and multivariable control system and method for waste water treatment plants (WWTP) provide multiple input multiple output (MIMO) control capacity and optimize the operation of a WWTP based on multiple objectives established by the people responsible for the WWTP operation. Among these objectives are maximizing the air quality or minimizing the GHG emissions produced in the WWTP. A method and system for the quantification of direct emission of GHG produced in the WWTP are also disclosed, based on a system of triangular configuration of thermographic cameras.

Throughout this document, the word "comprises" and variants thereof (such as "comprising", etc.) must not be interpreted as having an exclusive meaning, in other words, they do not exclude the possibility of what is being described incorporating other elements, steps, etc.

At the same time, the invention is not limited to the specific embodiments described herein and also extends, for example, to variants that may be embodied by an average person skilled in the art (for example, with regard to the choice of materials, dimensions, components, configuration, etc.), within the scope of what is inferred from the claims.

## Claims

1. - A method of multivariable control for optimizing the operation of a wastewater treatment plant, comprising:
gathering (2201) from a monitoring and control system (2101) a set of optimization priorities established for the operation of the wastewater treatment plant;
gathering and virtualizing (2202) process data and discharge quality data (700f), electric tariff rate data (700d), meteorological data (700e) and instant values of mass flow of the greenhouse gases (700a) emitted by the reactor (100); and
optimizing (2400) from said process data and discharge quality data (700f), electric tariff rate data (700d), meteorological data (700e) and instant values of mass flow of the greenhouse gases (700a) at least one of the following operation variables of the wastewater treatment plant: control loop setpoint for effluent ammonium NH₄⁺ concentration; control loop setpoint for ferric chloride dosage FeCl₃ for physicochemical phosphorus removal at the end of the biological treatment; control loop setpoint for dissolved oxygen concentration of aerobic reactors; control loop setpoint for nitrate NO₃⁻ concentration in the anoxic reactor or internal recirculation flow rate; control loop setpoint of solids concentration in the mixed liquor suspended solids or solids retention time; hydraulic retention time; flow rate of the blowers; and operating pressure of the blowers;
wherein said instant values of mass flow of the greenhouse gases (700a) emitted by the reactor (100) are obtained over time as follows:
at time instant t, obtaining (1001a, 1001b, 1001c) a first 2D image from a first thermographic camera (500), a first 2D image from a second thermographic camera (501) and a first 2D image from a third thermographic camera (502), said first 2D images corresponding to views of the plume of the greenhouse gases emitted by said reactor (100) at time instant t;
obtaining (1010) a first 3D image of the plume of the emitted greenhouse gases from said first 2D images;
at time instant t+1, obtaining (1001a, 1001b, 1001c) a second 2D image from the first thermographic camera (500), a second 2D image from the second thermographic camera (501) and a second 2D image from the third thermographic camera (502), said second 2D images corresponding to views of the plume of the greenhouse gases emitted by said reactor (100) at time instant t+1;
obtaining (1010) a second 3D image of the plume of the emitted greenhouse gases from second 2D images;
obtaining (1020) differences between said first and second 3D images;
obtaining (1030) from said differences a mass flow of the greenhouse gases emitted by said reactor (100) at time instant t+1.

2. The method of claim 1, wherein at said optimizing stage (2400) at least two of said operation variables of the wastewater treatment plant, are optimized.

3. The method of claim 1, wherein at said optimizing stage (2400) all of said operation variables of the wastewater treatment plant, are optimized.

4. The method of any one of the preceding claims, wherein said set of optimization priorities comprises at least one of the following criteria:
maximum quality of effluent, defined by at least one, preferably at least two, and more preferably all of the following parameters Chemical Oxygen Demand or Biological Oxygen Demand BODs, BOD₅ being the Biological Oxygen Demand analyzed at 5 days, Total Suspended Solids, Total Nitrogen, Nitrates NO₃⁻, Ammonium NH₄ and Total Phosphorus.
maximum energy efficiency, defined by the total energy consumption of the wastewater treatment plant,
maximum economic efficiency, defined by the total cost of operation of the wastewater treatment plant,
minimum greenhouse gases emission.

5. The method of claim 4, wherein said set of optimization priorities comprises at least two of said criteria.

6. The method of claim 4, wherein said set of optimization priorities comprises all of said criteria.

7. The method according to any one of the preceding claims, wherein said stage of optimizing (2400) operation parameters of the wastewater treatment plant, comprises:
defining (2401) an objective function based on said a set of optimization priorities;
building (2402) a genetic algorithm and establishing initial population, evolution rules and criteria of stop or convergence;
feeding (2403) a simulation of the wastewater treatment plant to be launched by said genetic algorithm with the last available values of said process data and discharge quality data (700f) and instant values of mass flow of the greenhouse gases (700a) emitted by the reactor (100), electric tariff data (700d) and meteorological data (700e);
launching (2404) said genetic algorithm which in turn launches a simulation of the wastewater treatment plant from a wastewater treatment plant model;
stopping the genetic algorithm when said established criteria of stop or convergence have been reached and retrieving the optimized operation parameters of the wastewater treatment plant.

8. The method of claim 7, further comprising calibrating (2300) said wastewater treatment plant model prior to executing said optimization (2400).

9. The method of claim 7, further comprising generating a wastewater treatment plant model.

## Patentansprüche

1. Multivariables Steuerungsverfahren zur Optimierung des Betriebs einer Abwasserkläranlage, aufweisend:
Sammeln (2201) eines Satzes von für den Betrieb der Abwasserkläranlage festgelegten Optimierungsprioritäten aus einem Überwachungs- und Steuerungssystem (2101);
Sammeln und Virtualisieren (2202) von Prozessdaten und Ausstoßqualitätsdaten (700f), elektrischen Tarifratedaten (700d), meteorologischen Daten (700e) und momentanen Massenflusswerten der von dem Reaktor (100) emittierten Treibhausgase (700a); und
ausgehend von den Prozessdaten und Ausstoßqualitätsdaten (700f), elektrischen Tarifratedaten (700d), meteorologischen Daten (700e) und momentanen Massenflusswerten der Treibhausgase (700a), Optimieren (2400) mindestens einer der folgenden Betriebsvariablen der Abwasserkläranlage:
Regelschleife-Sollwert für NH4⁺-Ammonium-Konzentration am Auslass;
Regelschleife-Sollwert für Eisenchlorid-Dosierung FeCl₃ für physikalisch-chemische Phosphorbeseitigung am Ende der biologischen Klärung;
Regelschleife-Sollwert für Konzentration von gelöstem Sauerstoff aerober Reaktoren;
Regelschleife-Sollwert für NO₃⁻-Nitrat-Konzentration in dem anoxischen Reaktor oder interne Rezirkulation-Strömungsrate;
Regelschleife-Sollwert für Feststoffkonzentration suspendierter Feststoffen in der Mischlauge oder Feststoffrückhaltezeit;
hydraulische Rückhaltezeit;
Strömungsrate der Gebläse; und
Betriebsdruck der Gebläse;
wobei die momentanen Massenflusswerte der von dem Reaktor (100) emittierten Treibhausgase (700a) zeitlich wie folgt gewonnen werden:
am Zeitpunkt t, Gewinnen (1001a, 1001b, 1001c) eines ersten 2D-Bilds aus einer ersten Thermographie-Kamera (500), eines ersten 2D-Bilds aus einer zweiten Thermographie-Kamera (501) und eines ersten 2D-Bilds aus einer dritten Thermographie-Kamera (502), wobei die ersten 2D-Bilder Ansichten der von dem Reaktor (100) emittierten Treibhausgaswolke am Zeitpunkt t entsprechen;
Gewinnen (1010) eines ersten 3D-Bilds der emittierten Treibhausgaswolke aus den ersten 2D-Bildern;
am Zeitpunkt t+1, Gewinnen (1001a, 1001b, 1001c) eines zweiten 2D-Bilds aus der ersten Thermographie-Kamera (500), eines zweiten 2D-Bilds aus der zweiten Thermographie-Kamera (501) und eines zweiten 2D-Bilds aus der dritten Thermographie-Kamera (502), wobei die zweiten 2D-Bilder Ansichten der von dem Reaktor (100) emittierten Treibhausgaswolke am Zeitpunkt t+1 entsprechen;
Gewinnen (1010) eines zweiten 3D-Bilds der emittierten Treibhausgaswolke aus den zweiten 2D-Bildern;
Gewinnen (1020) von Differenzen zwischen dem ersten und zweiten 3D-Bild;
Gewinnen eines von dem Reaktor (100) emittieren Treibhausgas-Massenflusses am Zeitpunkt t+1.

2. Verfahren nach Anspruch 1, wobei in dem Optimierungsschritt (2400) mindestens zwei der Betriebsvariablen der Abwasserkläranlage optimiert werden.

3. Verfahren nach Anspruch 1, wobei in dem Optimierungsschritt (2400) alle Betriebsvariablen der Abwasserkläranlage optimiert werden.

4. Verfahren nach einem der vorstehenden Ansprüche, wobei der Satz von Optimierungsprioritäten mindestens eines der folgenden Kriterien aufweist:
maximale Auslassqualität, definiert durch mindestens einen, bevorzugt mindestens zwei und stärker bevorzugt durch alle der folgenden Parameter: Chemischer Sauerstoffbedarf oder Biologischer Sauerstoffbedarf BODs, wobei BOD₅ der an 5 Tagen analysierte Biologische Sauerstoffbedarf ist, suspendierte Feststoffe insgesamt, Gesamtstickstoff, Nitrate NO₃⁻, Ammonium NH₄ und Gesamtphosphor,
maximale Energieeffizienz, definiert durch den Gesamtenergieverbrauch der Abwasserkläranlage,
maximale ökonomische Effizienz, definiert durch die Gesamtbetriebskosten der Abwasserkläranlage,
minimale Treibhausgasemission.

5. Verfahren nach Anspruch 4, wobei der Satz von Optimierungsprioritäten mindestens zwei der Kriterien aufweist.

6. Verfahren nach Anspruch 4, wobei der Satz von Optimierungsprioritäten alle Kriterien aufweist.

7. Verfahren nach einem der vorstehenden Ansprüche, wobei der Schritt zur Optimierung (2400) der Betriebsparameter der Abwasserkläranlage aufweist:
Definieren (2401) einer Zielfunktion auf Basis des Satzes von Optimierungsparametern;
Konstruieren (2402) eines genetischen Algorithmus und Festlegen einer anfänglichen Population, von Evolutionsregeln und Stopp- oder Konvergenzkriterien;
Füttern (2403) einer von dem genetischen Algorithmus zu startenden Simulation der Abwasserkläranlage mit den zuletzt verfügbaren Werten der Prozessdaten und Ausstoßqualitätsdaten (700f) und mit den momentanen Massenflusswerten der von dem Reaktor (100) emittierten Treibhausgase (700a), elektrischen Tarifdaten (700d) und meteorologischen Daten (700e);
Starten (2404) des genetischen Algorithmus, der wiederum eine Simulation der Abwasserkläranlage aus einem Abwasserkläranlage-Modell startet;
Stoppen des genetischen Algorithmus, wenn die festgelegten Stopp- oder Konvergenzkriterien erreicht worden sind, und Abrufen der optimierten Betriebsparameter der Abwasserkläranlage.

8. Verfahren nach Anspruch 7, ferner aufweisend Kalibrieren (2300) des Abwasserkläranlage-Modells vor Ausführen der Optimierung (2400).

9. Verfahren nach Anspruch 7, ferner aufweisend Generieren eines Abwasserkläranlage-Modells.

## Revendications

1. Procédé de contrôle multivariable pour optimiser le fonctionnement d'une station d'épuration des eaux usées, comprenant les étapes consistant à :
recueillir (2201) à partir d'un système de surveillance et de contrôle (2101) un ensemble de priorités d'optimisation établies pour le fonctionnement de la station d'épuration des eaux usées ;
recueillir et virtualiser (2202) les données de processus et les données sur la qualité des rejets (700f), les données sur le taux tarifaire électrique (700d), les données météorologiques (700e) et les valeurs instantanées du débit massique des gaz à effet de serre (700a) émis par le réacteur (100) ; et
optimiser (2400) à partir de ces données de processus et données de qualité des rejets (700f), des données de taux tarifaire électrique (700d), des données météorologiques (700e) et des valeurs instantanées du débit massique des gaz à effet de serre (700a) au moins l'une des variables d'exploitation suivantes de la station d'épuration des eaux usées : point de consigne de la boucle de contrôle pour la concentration d'ammonium NH₄⁺ dans l'effluent ; point de consigne de la boucle de contrôle pour le dosage de chlorure ferrique FeCl₃ pour l'élimination physico-chimique du phosphore à la fin du traitement biologique ; point de consigne de la boucle de contrôle pour la concentration d'oxygène dissous dans les réacteurs aérobies ; point de consigne de la boucle de contrôle pour la concentration de nitrate NO₃⁻ dans le réacteur anoxique ou le débit de recirculation interne ; point de consigne de la boucle de contrôle de la concentration de solides dans la liqueur mixte solides en suspension ou temps de rétention des solides ; temps de rétention hydraulique ; débit des soufflantes ; et pression de fonctionnement des soufflantes ;
lesdites valeurs instantanées du débit massique des gaz à effet de serre (700a) émis par le réacteur (100) étant obtenues au cours du temps de la façon suivante :
à l'instant t, obtenir (1001a, 1001b, 1001c) une première image 2D d'une première caméra thermographique (500), une première image 2D d'une deuxième caméra thermographique (501) et une première image 2D d'une troisième caméra thermographique (502), lesdites premières images 2D correspondant à des vues du panache des gaz à effet de serre émis par ledit réacteur (100) à l'instant t ;
obtenir (1010) une première image 3D du panache des gaz à effet de serre émis à partir desdites premières images 2D ;
à l'instant t+1, obtenir (1001a, 1001b, 1001c) une deuxième image 2D de la première caméra thermographique (500), d'une deuxième image 2D de la deuxième caméra thermographique (501) et d'une deuxième image 2D de la troisième caméra thermographique (502), lesdites deuxièmes images 2D correspondant à des vues du panache des gaz à effet de serre émis par ledit réacteur (100) à l'instant t+1 ;
obtenir (1010) une deuxième image 3D du panache des gaz à effet de serre émis à partir des deuxièmes images 2D ;
obtenir (1020) des différences entre lesdites première et deuxième images 3D ;
obtenir (1030) à partir desdites différences un débit massique des gaz à effet de serre émis par ledit réacteur (100) à l'instant t+1.

2. Procédé selon la revendication 1, dans lequel, lors de l'étape d'optimisation (2400), au moins deux des variables de fonctionnement de la station d'épuration sont optimisées.

3. Procédé selon la revendication 1, dans lequel, à ladite étape d'optimisation (2400), toutes lesdites variables de fonctionnement de la station d'épuration des eaux usées sont optimisées.

4. Procédé selon l'une quelconque des revendications précédentes, dans lequel l'ensemble de priorités d'optimisation comprend au moins l'un des critères suivants :
qualité maximale de l'effluent, définie par au moins un, de préférence au moins deux, et de préférence tous les paramètres suivants Demande Chimique en Oxygène ou Demande Biologique en Oxygène DBOs, DBOs étant la Demande Biologique en Oxygène analysée à 5 jours, matières en suspension totales, azote total, nitrates NO₃⁻, ammonium NH₄ et phosphore total
efficacité énergétique maximale, définie par la consommation totale d'énergie de la station d'épuration des eaux usées,
efficacité économique maximale, définie par le coût total d'exploitation de la station d'épuration des eaux usées,
émission minimale de gaz à effet de serre.

5. Procédé selon la revendication 4, dans lequel l'ensemble de priorités d'optimisation comprend au moins deux de ces critères.

6. Procédé selon la revendication 4, dans lequel l'ensemble de priorités d'optimisation comprend tous lesdits critères.

7. Procédé selon l'une quelconque des revendications précédentes, dans lequel ladite étape d'optimisation (2400) des paramètres de fonctionnement de la station d'épuration des eaux usées, comprend :
définir (2401) une fonction objectif basée sur ledit ensemble de priorités d'optimisation ;
construire (2402) un algorithme génétique et établir une population initiale, des règles d'évolution et des critères d'arrêt ou de convergence ;
alimenter (2403) une simulation de la station d'épuration des eaux usées à lancer par ledit algorithme génétique avec les dernières valeurs disponibles desdites données de processus et données de la qualité des rejets (700f) et les valeurs instantanées de débit massique des gaz à effet de serre (700a) émis par le réacteur (100), les données de tarification électrique (700d) et les données météorologiques (700e) ;
lancer (2404) ledit algorithme génétique qui, à son tour, lance une simulation de la station d'épuration des eaux usées à partir d'un modèle de station d'épuration des eaux usées ;
arrêter l'algorithme génétique lorsque les critères établis d'arrêt ou de convergence ont été atteints et récupérer les paramètres de fonctionnement optimisés de la station d'épuration des eaux usées.

8. Procédé selon la revendication 7, comprenant en outre le calibrage (2300) dudit modèle de station d'épuration des eaux usées avant l'exécution de ladite optimisation (2400).

9. Procédé selon la revendication 7, comprenant en outre la génération d'un modèle de station d'épuration des eaux usées.
